# EUROPÄISCHE PATENTSCHRIFT

(11) **EP 3 418 227 B1**
(45) Veröffentlichungstag und Bekanntmachung des Hinweises auf die Patenterteilung: **08.09.2021**
(21) Anmeldenummer: 18174230.5
(22) Anmeldetag: 25.05.2018
(51) Int. Cl.: B65G 65/00, B65G 1/04, B65D 25/38

(54) **SCHIENENGEBUNDENER TRANSPORTROBOTER UND VERFAHREN ZUM BETRIEB EINES SCHIENENGEBUNDENEN TRANSPORTROBOTERS**
RAIL-BOUND TRANSPORT ROBOT AND METHOD FOR OPERATING A RAIL-BOUND TRANSPORT ROBOT
ROBOT TRANSPORTEUR SUR RAIL ET PROCÉDÉ DE FONCTIONNEMENT D'UN ROBOT TRANSPORTEUR SUR RAIL

(30) Priorität: 02.06.2017 DE 102017005261
(43) Veröffentlichungstag der Anmeldung: 26.12.2018
(73) Patentinhaber: Heron Innovations Factory GmbH, 6850 Dornbirn (AT)
(72) Erfinder: BEER, Christian, 6858 Schwarzach (AT); BRAENDLE, Wolfgang, 6845 Hohenems (AT)
(74) Vertreter: Riebling, Peter

(56) Entgegenhaltungen:
- EP-B1- 2 826 731
- DE-A1-102015 218 380
- JP-A- S60 167 825
- US-A1- 2012 245 728

## Beschreibung

Die Erfindung betrifft einen Schienengebundenen Transportroboter und ein Verfahren zum Betrieb eines schienengebundenen Transportroboters.

Mit einer Anzahl von auf den gleichen Anmelder zurückgehenden Patentanmeldungen, z.B. der EP 2 826 731 B1, ist es bekannt, schienengebundene Transport-Roboter im Bereich einer Schienenbahn autonom zu bewegen und dabei verschiedene Lade- und Entlade-Aufgaben für Schüttgüter ausführen zu lassen.

Derartige Aufgaben betreffen auch den Transport von üblichen kastenförmigen Behältern von einer Füllstation zu einer Abladestation. Zum Transport von Schüttgut war es bisher bekannt, einen solchen einfachen, kastenförmigen Behälter mit einer bestimmten vorgegebenen Menge Schüttgut an einer Füllstation zu befüllen, mit dem Transport-Roboter zu der bestimmten Stelle einer Abladestation zu bewegen und dort den Schüttgutbehälter in eine Wendestation zu verfahren, um den Schüttgutbehälter in der Wendestation auszukippen und das Schüttgut in eine trichterförmige Aufnahme zu leiten.

Ein solches Verfahren hat sich im großen Umfang bewährt.

Als mögliche schüttfähige Güter werden im Rahmen der vorliegenden Erfindung sämtliche Schüttgüter verstanden, wie zum Beispiel Schrauben, Muttern, Kleinteile gleicher Art und Sorte, Granulate, Pulver und dergleichen mehr. Die Erfindung betrifft demnach einen Behälter zum Transport von schüttgutfähigen Gegenständen, die beliebiger Art und Anzahl sein können.

Beim Transport schüttgutfähiger Artikel in einem nach oben offenen, kastenförmigen Behälter besteht allerdings der Nachteil, dass nur eine ganz bestimmte abgemessene Menge gleichartigen Schüttguts transportiert werden kann, weil der Behälter nur dafür ausgerichtet ist, insgesamt ausgeleert und befüllt zu werden. Es ist keine Teilbefüllung des Behälters und auch keine Teilabgabe eines Teils des Schüttgutes aus dem Behälter möglich. Die JP S60 167 825 A offenbart einen schienengebundenen Transportroboter mit den Merkmalen des Oberbegriffs des Anspruchs 1. Das Dokument offenbart auch ein Verfahren zum Betrieb eines schienengebundenen Transportroboter mit den Merkmalen des Oberbegriffs des Anspruchs 5. Ferner ist ein Behälter mit bodenseitig angeordneten Öffnungsklappen offenbart.

In US 2012/0245728 A1 und DE 10 2015 218 380 A1 sind transportable Behälter mit bodenseitig angeordneten Öffnungsklappen offenbart.

Der Erfindung liegt die Aufgabe zugrunde, einen schienengebundenen Transportroboter mit einem Behälter zum Transport von Schüttgütern der eingangs genannten Art so weiterzubilden, dass eine kontrollierte Einzelmenge oder Einzelportionen einheitlicher oder unterschiedlicher Schüttgüter aus dem Behälter als Teil einer gesamten Füllmenge des Behälters abgegeben werden kann, und ebenso, dass der Behälter mit verschiedenen Füllmengen oder Portionen befüllt werden kann und diese gezielt an bestimmten oder einer einzigen Stelle abgegeben werden können, ohne eine Wende- oder Auskippaktion durchführen zu müssen.

Die Erfindung betrifft einen schienengebundenen Transportroboter, der in der Lage ist, mit Schüttgut befüllte Behälter automatisiert auf- und abzuladen und das dort enthaltene Schüttgut sortenrein und gezielt abzugeben.

Ferner betrifft die Erfindung ein Verfahren zum Betrieb eines schienengebundenen Transportroboter.

Zur Lösung der gestellten Aufgabe ist ein schienengebundener Transportroboter mit einem Behälter für den Transport von schüttgutfähigen Artikeln nach dem Gegenstand des unabhängigen Anspruches 1 vorgesehen.

Ein Verfahren zum Betrieb eines derartigen Transportroboters ist mit dem Gegenstand des unabhängigen Patentanspruches 5 gekennzeichnet.

Ein Merkmal der Erfindung ist, dass der Behälter für den Transport von schüttgutfähigen Artikeln als Multifach-Behälter ausgebildet ist. Er weist eine Anzahl von getrennten Fachabteilen auf, wobei jedem Fachabteil jeweils eine separate, bodenseitige Öffnungsklappe zugeordnet ist.

Dies bedeutet, der Behälter hat keine durchgehende Bodenwand, sondern die Bodenwand ist durch eine Anzahl von Öffnungsklappen gebildet, die einzeln und separat ansteuerbar sind.

Damit ergibt sich der Vorteil, dass die Bodenwand für die Entleerung des Multifach-Behälters genutzt wird, weil in der Bodenwand eine Vielzahl von Öffnungsklappen angeordnet ist, über welche das in den Innenraum des Multifach-Behälters eingefülltes Schüttgut gezielt nach unten über die geöffneten Öffnungsklappen abgegeben werden kann. Es wird deshalb auf eine bekannte Wendestation verzichtet, in welcher der auszuleerende Behälter zwecks Entleerung ausgekippt wird. Mit der Zuordnung von separaten Öffnungsklappen kann der Multifach-Behälter an jeder beliebigen Stelle der Schienenbahn ausgeleert werden, weil eine Wendestation nicht mehr benötigt wird.

In einer ersten Ausgestaltung eines solchen Multifach-Behälters ist es vorgesehen, dass die Bodenwand des Multifach-Behälters durch mindestens zwei schwerkraftbedingt schwenkbare Öffnungsklappen gebildet ist, und dass jeder Öffnungsklappe eine Trennwand zugeordnet ist, sodass in diesem einen, extremen Ausführungsbeispiel der Behälter mittig durch eine Trennwand getrennt ist, und links und rechts von der Trennwand jeweils die Bodenwand durch eine einzige Öffnungsklappe gebildet ist, um so zwei voneinander unabhängig zu befüllende und zu entleerende Fachabteile im Multifach-Behälter zu bilden.

Bei dieser Ausführungsform besteht allerdings der Nachteil, dass in Bezug auf die Abmessungen eines solchen Multifach-Behälters, der zum Beispiel eine Länge von 600 und eine Breite von 400 mm aufweist, nunmehr die Länge der Bodenklappe etwa 280 mm beträgt. Damit bedarf es eines relativ großen Entladeraums unterhalb des Multifach-Behälters, um eine vollständige Öffnung einer derartig groß dimensionierten Öffnungsklappe zu bewerkstelligen.

Deshalb ist in einer Weiterbildung der Erfindung vorgesehen, dass die Öffnungsklappen in sich nochmals unterteilt sind, sodass auch bei einer beispielhaft angegebenen mittleren Trennwand im Innenraum des Multifach-Behälters nunmehr beispielsweise jedem Fachabteil drei gleiche Öffnungsklappen zugeordnet sind, die sich jalousie-artig öffnen und schließen.

Dies hat den Vorteil, dass durch die Segmentierung oder Aufteilung einer einzigen großen Öffnungsklappe, die jeweils dem Fachabteil zugeordnet ist, nunmehr drei einzelne, kleiner dimensionierte Öffnungsklappen verwendet werden können, wobei auch für diese Öffnungsklappen das Grundprinzip gilt, dass jede Öffnungsklappe als einseitig schwenkbar, schwerkraftbelastet zu öffnende Klappe ausgebildet ist. Die kleineren, segmentierten Öffnungsklappen benötigen einen kleineren Schwenkraum nach unten, wodurch die Entladehöhe über einer Entladestation verringert werden kann.

Durch die Vielfachausbildung des Multifach-Behälters mit einer Anzahl von Fachabteilen wird die Bodenwand jedes Fachabteils durch eine Mehrzahl von Öffnungsklappen gebildet. Damit ergibt sich der Vorteil, dass nunmehr auch weitere Trennwände eingezogen werden können, weil im Prinzip jeder Öffnungsklappe eine Trennwand zugeordnet werden kann, und sich somit eine Vielzahl von Fachabteilen im Innenraum des Multifach-Behälters bildet, weil jedem Fachabteil mindestens eine Öffnungsklappe zugeordnet werden kann.

Somit besteht ein modularer Aufbau für den Multifach-Behälter dergestalt, dass wahlweise im Innenraum des Multifach-Behälters ein oder mehrere Trennwände zur Ausbildung von ein oder mehreren Fachabteilen angeordnet werden können, wobei jedes Fachabteil mit einem unterschiedlichen Schüttgut in unterschiedlicher Menge befüllt werden kann.

Es kann zum Beispiel vorgesehen werden, dass ein Multifach-Behälter vier Fachabteile aufweist und jedes Fachabteil mit einem anderen Schüttgut gefüllt ist. Ein solches Schüttgut kann zum Beispiel aus Schrauben oder Muttern einer bestimmten Größe bestehen, sodass - zum Beispiel - das erste Fachabteil mit Muttern der Größe M6, das zweite Fachabteil mit Muttern der Größe M8, das dritte Fachabteil mit Muttern der Größe M10 und das vierte Fachabteil mit Muttern der Größe M12 befüllt werden kann.

Analog gilt dies für die Befüllung von Schrauben oder anderen schüttgutfähigen Artikeln, wie zum Beispiel LEDs, elektronische Schaltungen oder andere beliebige elektrische oder elektronische Bauteile.

Demnach besteht bei der Erfindung der Vorteil, dass jedes Fachabteil im Multifach-Behälter sortenrein mit einem bestimmten Schüttgut befüllt werden kann, und das Schüttgut gezielt und allein nur aus dem jeweiligen Fachabteil abgegeben werden kann, ohne dass die Schüttgüter in den anderen Fachabteilen davon beeinflusst werden.

In einer bevorzugten Ausgestaltung ist es deshalb vorgesehen, dass jede Bodenwand des jeweiligen Fachabteils des Multifach-Behälters aus einer Anzahl von Öffnungsklappen besteht, und dass die Öffnungsklappen mit einem zentralen, horizontal bewegbaren Verriegelungsschieber in ihrer Schließstellung arretiert sind.

Wird der Verriegelungsschieber in horizontaler Richtung bewegt, wird die Verriegelung zwischen dem Verriegelungsschieber und den jeweiligen Öffnungskanten der Öffnungsklappen gelöst, und die Öffnungsklappen schwenken jeweils schwerkraftbelastet in ihrer Offenstellung.

Die Erfindung ist nicht auf die Art und Ausbildung der Öffnungsklappen in irgendeiner Weise beschränkt.

In einer ersten Ausgestaltung ist es vorgesehen, dass die Schwenkachsen der einzelnen Öffnungsklappen parallel zur Fahrtrichtung des Multifach-Behälters ausgerichtet sind, der auf einem in dieser Fahrtrichtung angetriebenen Transport-Roboter aufgeladen ist.

In einer anderen Ausgestaltung der Erfindung kann es vorgesehen sein, dass die Schwenkachsen der Öffnungsklappen senkrecht zu der Fahrtrichtung des Multifach-Behälters und damit des Transport-Roboters ausgebildet sind. In einer dritten Ausgestaltung kann es vorgesehen sein, dass alle Öffnungsklappen lediglich in einer einzigen Öffnungsrichtung öffnen. Und in einer vierten Ausgestaltung kann es vorgesehen sein, dass die Öffnungsklappen sich in zueinander entgegengesetzten Öffnungsrichtungen öffnen.

Ebenso kann es in einer weiteren Ausführungsform vorgesehen sein, dass sich die Öffnungsklappen von randseitig angeordneten Schwenklagern ausgehend öffnen. Und in einer weiteren Ausgestaltung kann es vorgesehen sein, dass sich die Schwenkklappen von einer Mittenebene ausgehend nach außen hin öffnen.

In einer bevorzugten Ausgestaltung der Erfindung wird ein Verfahren zum Betrieb eines derartigen Multifach-Behälters in Verbindung mit einem autonomen, im Bereich einer Schienenbahn angetriebenen Transport-Roboter beschrieben.

In dieser Ausführungsform wird als erfindungswesentlich beansprucht, dass der Multifach-Behälter in einem nach oben offenen Laderaum auf der Oberseite des Transport-Roboters aufgenommen ist und die Bodenseite des Laderaumes durch zwei parallele und im gegenseitigen Abstand, auf gleicher Ebene liegende Teleskoparme gebildet ist, die jeweils von einem verschiebbar angetriebenen Transportband bedeckt sind.

Ein solcher Teleskoparm mit darauf angeordneten, verschiebbar angetriebenen Transportbändern ist Gegenstand anderer Patente des gleichen Anmelders. Auf die dortige Offenbarung im Hinblick auf die Funktion eines solchen TransportRoboters in Verbindung mit Teleskoparmen und jeweiligen Transportbändern wird verwiesen.

Kennzeichnend für die Art des verwendeten Transport-Roboters ist demnach, dass er zwei parallel und verschiebbar, in Längsrichtung angetriebene Teleskoparme aufweist, deren Oberseiten jeweils von einem verschiebbar angetriebenen Transportband bedeckt sind.

Dadurch ergibt sich die Möglichkeit, dass der erfindungsgemäße Multifach-Behälter im Laderaum des Transport-Roboters aufgenommen ist und mit seiner Bodenseite auf den Teleskoparmen aufliegt. Die Teleskoparme sichern die Öffnungsklappen gegen Öffnung im Laderaum des Transportroboters.

Zur Entladung eines solchen Multifach-Behälters ist es dann vorgesehen, dass zunächst die Teleskoparme mit dem aufgeladenen Multifach-Behälter aus dem Transport-Roboter seitlich herausfahren, das heißt senkrecht zur Fahrtrichtung des Transport-Roboters und den aufgeladenen Multifach-Behälter auf einem Stützprofil absetzen.

Somit gelangen die Teleskoparme mit dem aufgeladenen Multifach-Behälter in den Bereich einer Entladestation, die insbesondere dadurch gekennzeichnet ist, dass die Bodenwand des Multifach-Behälters schüttgutleitend in einen Entladetrichter hineinläuft. In der vollständigen Entladestellung sitzt der Multifach-Behälter auf den ausgefahrenen Teleskoparmen, wobei dafür gesorgt ist, dass die ausgefahrenen Teleskoparme die Schwenklage der Öffnungsklappen arretieren, sodass er - solange der Teleskoparm den Multifach-Behälter untergreift - auch die Öffnungsklappen in ihrer Schließstellung gehalten werden.

Sobald die Teleskoparme jedoch in den Transport-Roboter zurückgezogen werden, werden die Öffnungsklappen des Multifach-Behälters freigegeben und das in den Innenraum des Multifach-Behälters in die unterschiedlichen Fachabteilungen eingefüllte Füllgut kann genau positioniert durch gesteuerte Freigabe (Entarretierung) der Öffnungsklappe des jeweiligen Fachabteils in den Entladetrichter entleert werden.

Wird der Teleskoparm nur teilweise zurückgefahren, dann werden auch nur die vom Teleskoparm nicht mehr untergriffenen zwei oder drei Öffnungsklappen geöffnet, sodass sie in ihrer Öffnungsstellung automatisch und schwerkraftbedingt herausschwenken. Es kann deshalb auch nur ein einziges Fachabteil entleert wird.

Bei weiterem Zurückziehen des Teleskoparmes in den Transport-Roboter hinein werden nacheinander folgend auch die weiteren Öffnungsklappen schwerkraftbedingt öffnen, und das jeweilige Fachabteil wird automatisch geöffnet, und das dort gelagerte Schüttgut in den Entladetrichter eingefüllt.

Somit kann jeweils ein Fachabteil sortenrein und genau voneinander getrennt ausgehend von der rechten Wand des Multifach-Behälters bis zur linken Wand des Multifach-Behälters geöffnet werden, wodurch dann das jeweilige Fachabteil geöffnet wird.

Es ist selbstverständlich auch möglich, den Multifach-Behälter ohne Trennfach zu betreiben, was bedeutet, dass sich beim vollständigen Zurückziehen des Teleskoparmes in den Transport-Roboter alle Öffnungsklappen in der Bodenwand des Multifach-Behälters automatisch schwerkraftbedingt öffnen und der gesamte innenraum des Multifach-Behälters, der mit Schüttgut beladen ist, in den Entladetrichter schwerkraftbedingt fällt.

Der Erfindung ist auch darauf gerichtet, dass im Bereich einer vielfach verzweigten und möglicherweise auch in verschiedenen Ebenen angeordneten Schienenbahn eine Anzahl von Entlade- und Befüllstationen angeordnet sind.

Es können auch ein oder mehrere Ausschleusungsstrecken verwendet werden, wo die leeren Multifach-Behälter in einem Regalsystem auf einer oder mehreren Ebenen höhenverschieden gelagert und bei Bedarf von einem TransportRoboter aufgeladen und zu einer Befüllstation transportiert werden.

In einer bevorzugten Ausgestaltung der Erfindung ist der Entladetrichter mit einem Fallrohr verbunden, das manuell in Abhängigkeit von der Schüttgutsorte auf unterschiedliche Sammelbehälter aufsteckbar ist.

Statt der manuellen Umsteckung des Fallrohres auf unterschiedliche Sammelbehälter kann auch eine automatische Verschiebung eines solchen Fallrohres auf unterschiedliche Sammelbehälter erfolgen. Dies kann mit einem X-Y-Schlittensystem erfolgen.

Vorteilhaft ist, dass eine sortenreine Abgabe des Füllgutes über den Entladetrichter und das Fallrohr in unterschiedliche, die jeweilige Sorte enthaltenen Sammelbehälter erfolgt.

Es kann natürlich auch mit einer Entladestation eine Mischung von Füllgut in solchen Sammelbehältern vorgenommen werden, wenn zum Beispiel vorgesehen ist, dass Muttern der Größe M7 mit Schrauben der Größe M7 in einem einzigen Sammelbehälter zusammengefasst werden sollen.

Die Verteilung der Schüttgutartikel auf die einzelnen Sammelbehälter kann sensorgesteuert erfolgen, wobei jedem Sammelbehälter ein Sensor zugeordnet ist, der die jeweilige Rohrposition des Fallrohres erfasst und damit feststellt, welcher Sammelbehälter gerade mit welchem Füllgut befüllt wird.

Ebenso ist es möglich, das Fallrohr automatisch oder manuell verschiedenen Sammelbehältern zuzuführen, die ihrerseits schüttgutleitend über zugeordnete Füllrohre mit verschiedenartigen Verarbeitungsmaschinen verbunden sind, um so eine automatische Zuführung von Schüttgütern zu unterschiedlichen Verarbeitungsmaschinen zu gewährleisten.

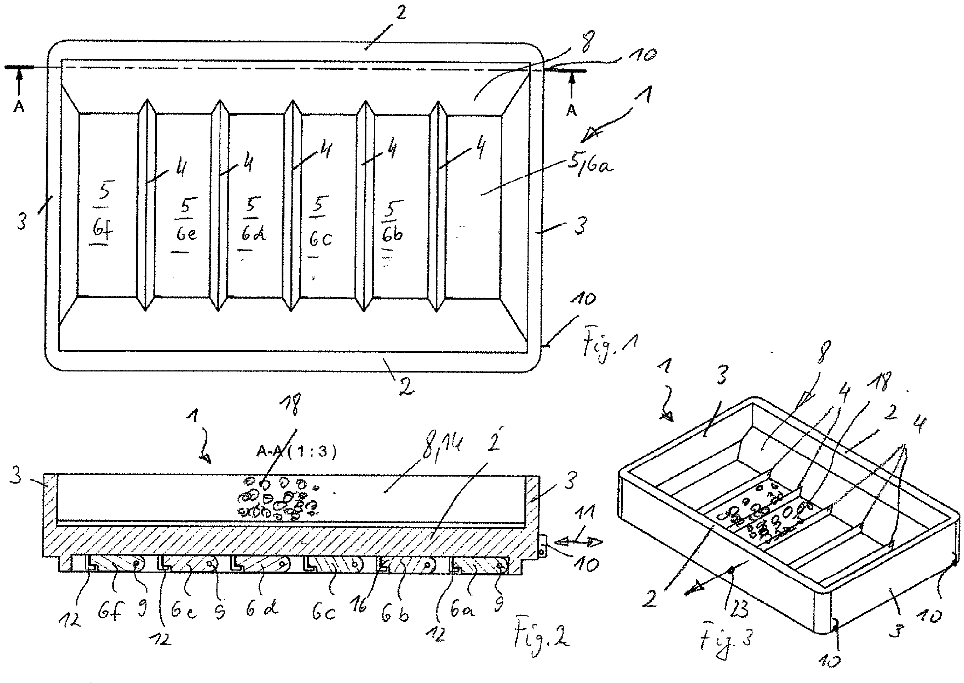

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor. Dabei sind die Ausführungsformen der Figuren 1 bis 18 und 31 bis 38 nicht gemäß der Erfindung.

Es zeigen:
Figur 1: Draufsicht auf einen Multifach-Behälter ohne Anordnung von Trennwänden
Figur 2: der Schnitt gemäß der Linie A-A in Figur 1
Figur 3: die perspektivische Ansicht des Multifach-Behälters nach Figur 1 und 2
Figur 4: ein weiterer Schnitt gemäß der Linie A-A in Figur 1 mit einer nach außen versetzten Schnittlinie zur Darstellung der verwendeten Verriegelungsschieber
Figur 5: die perspektivische Ansicht eines Multifach-Behälters mit einer Trennwand und der Unterteilung in zwei Fachabteile
Figur 6: die Draufsicht auf die Anordnung nach Figur 5
Figur 7: die schematisierte Darstellung bei der Öffnung einer einzigen Öffnungsklappe in einem Fachabteil
Figur 8: Schnitt gemäß der Linie B-B in Figur 6
Figur 9 - Figur 10: eine erste Ausführungsform in Seitenansicht und Stirnansicht der Anordnung von Öffnungsklappen
Figur 11 - Figur 12: eine zweite Ausführungsform der Anordnung von Öffnungsklappen
Figur 13 - Figur 14: eine dritte Ausführungsform der Anordnung von Öffnungsklappen
Figur 15 - Figur 16: eine vierte Ausführungsform der Anordnung von Öffnungsklappen
Figur 17 - Figur 18: eine fünfte Ausführungsform der Anordnung von Öffnungsklappen
Figur 19: perspektivische Darstellung eines Transport-Roboters nach der Erfindung
Figur 20: der Transport-Roboter nach Figur 19 mit einem aufgeladenen Multifach-Behälter
Figur 21: der Transport-Roboter nach Figur 20 im Schnitt in Höhe eines Teleskoparmes in einer teilweisen Übergabeposition
Figur 22: die gleiche Darstellung wie Figur 21 bei Erreichen der vollständigen Übergabeposition und bei anfänglicher Entladung der Fachabteile
Figur 23: ein Ausführungsbeispiel, bei dem gegenüber Figur 23 alle Fachabteile entladen werden oder nur ein einziges Fachabteil vorhanden ist
Figur 24: die Draufsicht auf eine Schienenbahn für einen Transport-Roboter mit der Entladestation und einer Befüllstation
Figur 25: die gleiche Darstellung wie Figur 24 in verkleinerter Ausführung mit Darstellung der Schnittführung
Figur 26: Schnitt durch die Entladestation in Pfeilrichtung D-D in Figur 25
Figur 27: Schnitt in Pfeilrichtung F-F in Figur 28 durch einen Ablageplatz für die Ablage eines Multifach-Behälters mit Arretierung seiner bodenseitigen Öffnungsklappen
Figur 28: die Draufsicht auf die Schienenbahn mit einer Ausschleusungsstrecke und einem Regalsystem zur Aufbewahrung von Multifach-Behältern
Figur 29: die perspektivische Darstellung eines Arbeitsplatzes oder eines Montageplatzes zur sortenreinen Verteilung von Schüttgütern
Figur 30: ein gegenüber Figur 29 abgewandeltes Ausführungsbeispiel, mit dem gezeigt ist, dass unterschiedliche Schüttgüter sortenrein unterschiedlichen Verarbeitungsmaschinen zugeführt werden können
Figur 31: Schnitt durch eine weitere Ausführung, bei welcher der Transportroboter mit einem einfachen Längsförderer ausgestattet ist und die Übergabe in eine Befüllstation mit einer verschiebbar angetriebenen Greifvorrichtung erfolgt
Figur 32: Die Draufsicht auf die Figur 31
Figur 33: Die Grundposition der Anordnung nach Figur 31 mit einem noch auf den Transportroboter aufgeladenen Multifach- Behälter
Figur 34: Die Draufsicht auf die Figur 33
Figur 35: Die perspektivische Ansicht eines Transportroboters mit einem einfachen Längsförderer, wie er im Ausführungsbeispiel nach den Figuren 31-34 verwendet wird
Figur 36: Die gleiche Darstellung wie Figur 35 mit einem im Transportroboter aufgenommenen Multifach- Behälter
Figur 37: Eine der Figur 32 entsprechende Transportlage des Multifach-Behälters von einer Auflaufebene 67 zu einer Befüll- und Entladestation
Figur 38: Perspektivische Darstellung eines Längsförderers mit einem daran angeschlossenen Querförderer, auf dem die zu entleerenden und befüllenden Multifach- Behälter transportiert werden

Die Figuren 1 bis 18 zeigen Ausführungsformen, die nicht gemäß der Erfindung sind. In den Figuren 1 bis 3 ist ein Multifach-Behälter 1 dargestellt, der im Wesentlichen aus zwei zueinander parallelen Längswänden 2 und hierzu senkrecht angeordneten Querwänden 3 besteht, wobei die Bodenwand 5 durch eine Vielzahl von parallel zueinander angeordneten Öffnungsklappen 6a-6f gebildet ist. Der Multifach-Behälter ist bevorzugt rechteckig oder quadratisch. Er kann jeden beliebigen Grundriss aufweisen, das heißt, er kann oval, dreieckig, mehreckig oder rund sein. Es ist auch nicht notwendig, dass die Seitenwände vertikal aufrecht ausgerichtet sind. Sie können sich auch konisch zur Bodenseite hin verengen oder erweitern.

Im gezeigten Ausführungsbeispiel laufen die Längs- und Querwände 2, 3 schräg nach innen in Richtung auf die Bodenwand 5, um ein einwandfreies Einlaufen von Schüttgut und eine Ablagerung auf der Bodenwand 5 zu gewährleisten.

Die Öffnungsklappen 6 sind jeweils an einer Seite in einem Schwenklager 9 schwenkbar gelagert. Die Schwenklage wird durch einen Verriegelungsschieber 10 arretiert.

Beim einem Betrieb mit einem Transport-Roboter 20 ist ein Verriegelungsschieber 10 nicht zwingend notwendig, weil die Verriegelung der einzelnen Öffnungsklappen 6 durch einen Teleskoparm 25 geschieht, wie später noch erläutert wird.

Im gezeigten Ausführungsbeispiel dient der Verriegelungsschieber 10 einer manuellen Verriegelung der einzelnen Öffnungsklappen 6, weil jede Öffnungsklappe an ihrem freien schwenkbaren Ende eine Klappenkante 16 aufweist, die auf einer zugeordneten Verriegelungsnase 12 eines als Längsschieber ausgebildeten Verriegelungsschiebers 10 aufsitzt.

Der Verriegelungsschieber 10 kann somit in den Pfeilrichtungen 11 manuell oder motorisch angetrieben verschoben werden.

Der Innenraum 8 des Multifach-Behälters 1 ist mit einem Schüttgut 18 befüllt, wobei der besseren Übersichtlichkeit wegen im gezeigten Ausführungsbeispiel nach den Figuren 1 bis 3 lediglich ein einziges Fachabteil 14 vorhanden ist, welches insgesamt durch den Innenraum 8 gebildet ist.

In diesem einzigen Fachabteil 14 und somit im Innenraum 8 ist ein Schüttgut 18 angeordnet.

Zum besseren Schutz der einzelnen Schwenklager 9 der Öffnungsklappen 6 sind die Schwenklager 9 von oben durch horizontal verlegte Abdeckprofile 4 abgedeckt, die bei eingefülltem Schüttgut 18 von diesem überdeckt werden.

Im gezeigten Ausführungsbeispiel ist der Multifach-Behälter 1 in Pfeilrichtung 23 verschiebbar angetrieben, wie später noch anhand eines zu beschreibenden Transport-Roboters 20 erläutert wird.

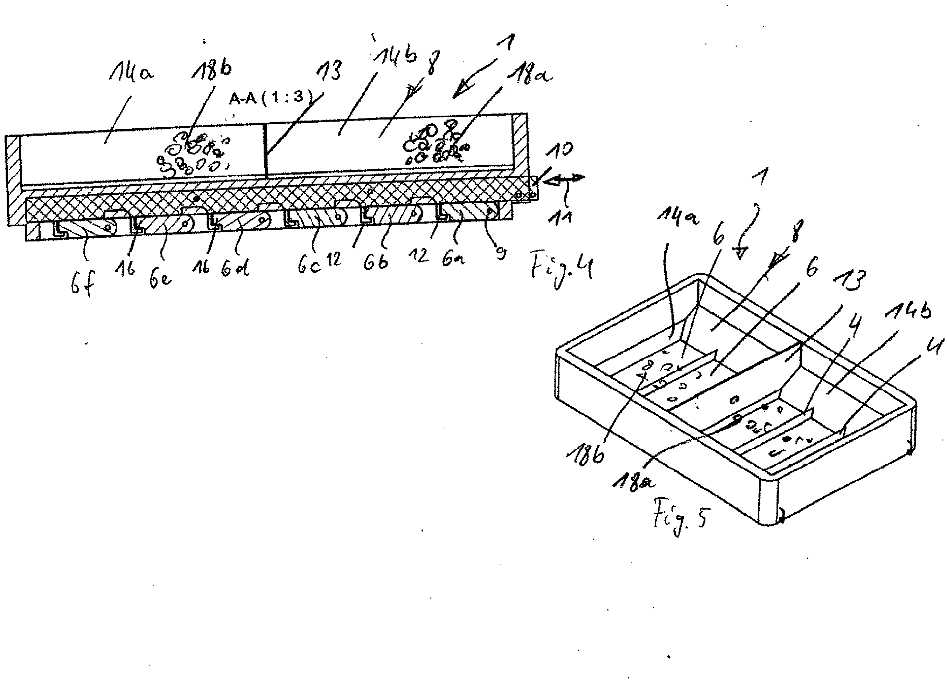

In Figur 4 ist ein Schnitt durch einen Verriegelungsschieber 10 dargestellt, und es ist erkennbar, dass am freien unteren Ende des Verriegelungsschiebers jeweils eine Anzahl von Verriegelungsnasen 12 angeordnet sind, welche das freie schwenkbare Ende einer Klappenkante 16 der jeweiligen Öffnungsklappe 6a-6f untergreift.

Wird der Verriegelungsschieber 10 in Pfeilrichtung 11 nach links verschoben, geraten die Verriegelungsnasen 12 außer Eingriff mit den Klappenkanten 16 der Öffnungsklappen 6a-6f, die sich dann schlagartig schwerkraftbedingt öffnen und um das Schwenklager 9 entgegen dem Uhrzeigersinn verschwenken.

Im Ausführungsbeispiel nach Figuren 4 und 5 ist - im Vergleich zum Ausführungsbeispiel nach den Figuren 1 bis 3 - gezeigt, dass nunmehr durch ein mittleres Trennfach 13 zwei voneinander getrennte Fachabteile 14a, 14b gebildet sind, die sortenrein mit unterschiedlichen Schüttgütern 18a, 18b gefüllt sind.

Es können eine beliebige Anzahl von zueinander parallelen und einen gegenseitigen Abstand aufweisende Trennfächer 13 vorgesehen sein, um auf diese Weise den Zwischenraum zwischen jedem Trennfach 13 als Fachabteil 14 zu nutzen. Ein einziges Trennfach bildet demnach 2 Fachabteile 14a, 14b und zwei Trennfächer 13 würden dann 3 Fachabteile bilden. Die Vervielfachung der Trennfächer 13 und die daraus resultierende Anzahl von Fachabteilen 14 kann beliebig fortgesetzt werden.

Das Ausführungsbeispiel nach Figur 5 zeigt, dass sich das dort gezeigte Trennfach 13 in seiner Länge so bemessen ist, dass es schüttgutdicht mit beiden Stirnseiten an die zueinander parallelen Längswände 2 anschliesst.

Es kann in einer anderen Ausführung vorgesehen sein, dass noch ein mittlere Längswand eingezogen ist, welche in der Mittenachse des Behälters 1 angeordnet ist und welche die aus dem einzigen vorhandenen Trennfach 13 gebildeten 2 Fachabteile 14a, 14b nunmehr in insgesamt 4 unterschiedliche Fachabteile 2 x 14a und 2 x 14b unterteilt. Die Fachabteile 14a, 14b können also matrixartig durch ein Quer-Trennfach nochmals untereinander aufgeteilt sein.

In allen Ausführungsbeispielen sollte dem jeweiligen Fachabteil auch mindestens eine bodenseitige Öffnungsklappe 6a-6f zugeordnet sein, um eine gezielte Entleerung des jeweiligen Fachabteils zu ermöglichen.

Im Fall der matrixartigen Unterteilung der Fachabteile durch mindestens ein zusätzliches Quer-Trennfach, dessen Längserstreckung die Längserstreckung des einen oder der mehreren Trennfächer 15 im Winkel von 90 Grad schneidet, kann es dann vorgesehen sein, dass auch die bodenseitigen Öffnungsklappen 6a-6f in ihrer Längserstreckung halbiert sind, was bedeutet, dass sie sich nicht mehr von der einen Längswand 2 zur gegenüberliegenden Längswand 2 erstrecken, sondern nur noch bis zur Hälfte des Behälters, nämlich bis zu dessen Mittenlängslinie.

Das eine, zusätzliche Quer-Trennfach liegt dann in der Mittenlängslinie des Behälters 1 und die bodenseitigen Öffnungsklappen 6a-6f erstrecken sich in ihrer jeweiligen Länge nur noch bis zur Mittenlängslinie des Behälters 1, sodass jedem matrixartig ausgebildeten Fachabteil 2 x 14a und 2 x 14b jeweils eine eigene, separat ansteuerbare Öffnungsklappe zugeordnet ist.

Auch ist es nicht lösungsnotwendig, dass die Trennfächer 13 und die sie möglicherweise unterteilenden, zusätzlichen Quer-Trennfächer geradlinig ausgebildet sind. Sie können in der Draufsicht gebogen, gewellt, halbrund oder rund ausgebildet sein. Die jeweils die Bodenseite des durch die Trennfächer gebildeten Fachabteile 14a, 14b bildende Öffnungsklappe 6a-6f sollte dann dem Querschnitt des Fachabteils 14, 14b angepasst sein, um eine vollständige, bodenseitige Entleerung des im Fachabteil 14a, 14b gespeicherten Schüttgutes 18 zu erreichen.

Der Verriegelungsschieber 10 ist zunächst nur für eine manuelle Betätigung für den Betriebsfall ausgelegt, um den gefüllten Multifach-Behälter manuell von einem Transport-Roboter 20 abzuheben und dafür zu sorgen, dass sich die Öffnungsklappen 6a-6f unbeabsichtigt öffnen. Es handelt sich also um einen manuell oder motorisch betätigbaren Verriegelungsschieber 10, der nur für den Fall der manuellen Entnahme des Multifach-Behälters 1 vom Transport-Roboter 20 zum Einsatz kommt.

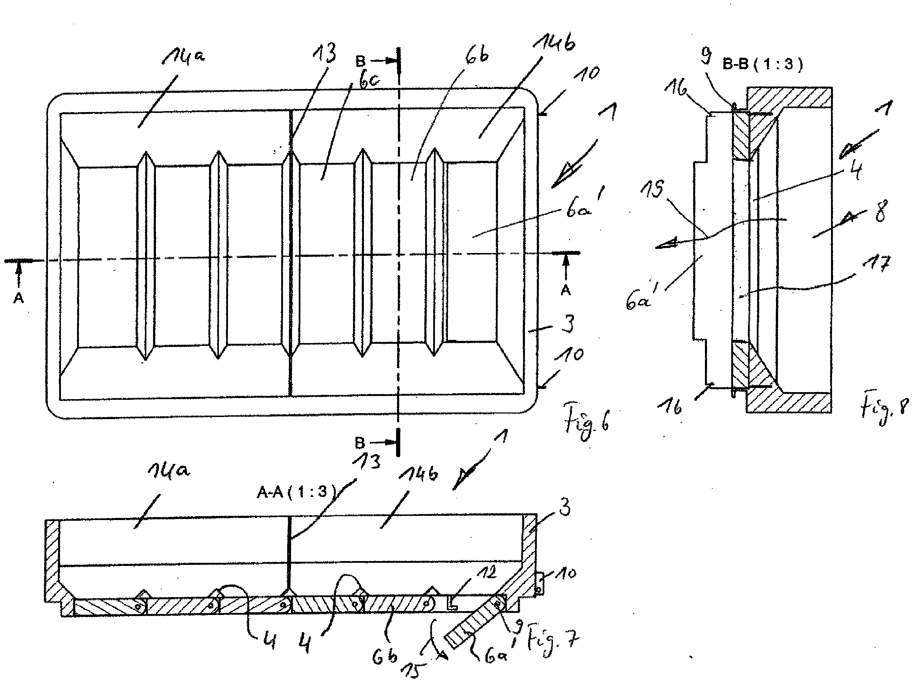

In Figuren 6 bis 8 sind die weiteren Einzelheiten der Ausführungen nach den Figuren 4 und 5 näher dargestellt.

Nachdem die Bodenwand 5 des Multifach-Behälters 1 aus einer Vielzahl von Öffnungsklappen 6a-6f besteht und jede Öffnungsklappe 6a-6f identisch ausgebildet ist, reicht es aus, die Funktion einer einzigen Öffnungsklappe 6a zu beschreiben.

Im gezeigten Ausführungsbeispiel wird deshalb die Öffnungsklappe 6a, die an der rechten Querwand 3 angrenzt, nur beispielhaft geöffnet dargestellt, um zu zeigen, dass sie in Pfeilrichtung 15 um das Schwenklager 9 herumschwenkt, und somit die Klappenkante 16 außer Eingriff mit der Verriegelungsnase 12 des Verriegelungsschiebers 10 gelangt.

Die Figur 8 zeigt nunmehr die Offenstellung der Öffnungsklappe 6a in die Stellung 6a', wo erkennbar ist, dass nunmehr die Bodenöffnung 17 geöffnet ist, weil die die Bodenwand 5 bildende Öffnungsklappe 6a nunmehr in die Stellung 6a' verschwenkt wurde.

Demzufolge wird ein im Fachabteil 14b eingefülltes Schüttgut bei Öffnung aller diesem Fachabteil zugeordneten Öffnungsklappen 6 in Fallrichtung 19 nach unten herausfallen.

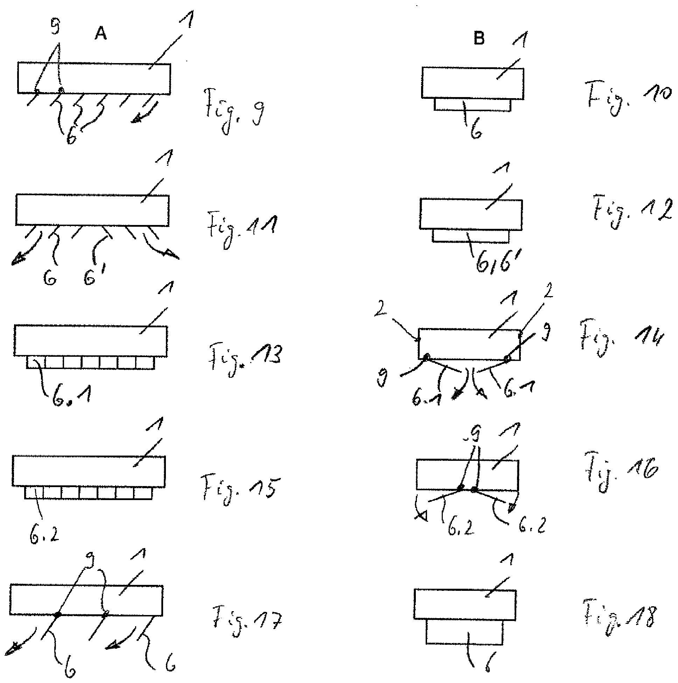

Die Figuren 9 bis 18 zeigen unterschiedliche Ausbildungen derartiger Öffnungsklappen, wobei jeweils zwei nebeneinanderliegende Figuren die Seitenansicht und die Stirnansicht der jeweiligen Ausführungsform zeigen.

In Figuren 9 und 10 ist dargestellt, dass sich alle Öffnungsklappen 6 jalousieartig in der gleichen Richtung öffnen und parallel zueinander angeordnet sind, und hierbei - entsprechend dem Ausführungsbeispiel nach Figur 3 - die Schwenklager 9 parallel zur Fahrtrichtung in Pfeilrichtung 23 angeordnet sind.

Die Figuren 11 und 12 zeigen, dass sich die Öffnungsklappen 6, 6' auch ausgehend von einer Mittellinie - in entgegengesetzten Richtungen öffnen können, und die Figuren 13 und 14 zeigen, dass die Öffnungsklappen 6.1 und 6.2 mit ihren Schwenklagern nächst den jeweiligen Längswänden 2 angeordnet sein können.

Die Figuren 15 und 16 zeigen, dass die Schwenklager 9 auch etwa im Mittenbereich der Bodenwand 5 des Multifach-Behälters 1 angeordnet werden können und gegeneinander gerichtet ausschwenken.

Die Figuren 17 und 18 zeigen im Vergleich zu den Figuren 9 und 10, dass eine Vielzahl von Öffnungsklappen 6 oder auch eine geringere Anzahl - im Vergleich zu Figur 9 - von Öffnungsklappen 6 verwendet werden kann.

Die Segmentierung der Bodenwand 5 in gleichgroße Öffnungsklappen 6 kann also auf verschiedene Weise durch die Art, Anzahl und Öffnungsrichtung der Öffnungsklappen 6a-f verwirklicht werden, wie dies in den Ausführungsbeispielen nach den Figuren 9 bis 18 dargestellt ist.

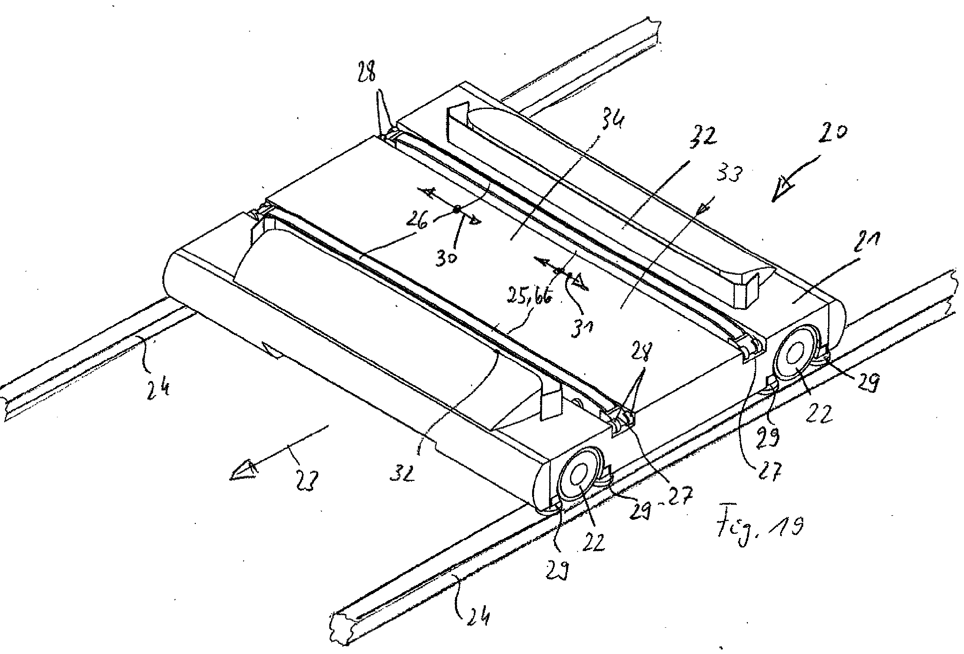

Die Figur 19 zeigt als Ausführungsbeispiel einen Transport-Roboter 20, der im Wesentlichen aus einem in sich geschlossenen Gehäuse 21 besteht, in dem der Steuerungscomputer, der Antrieb, die Batterien und die Funkschnittstelle zur Kommunikation mit anderen Transportrobotern und einer Zentrale, sowie alle sonstigen Elemente für einen autarken Betrieb des Transport-Roboters 20 auf den Fahrschienen 24 einer Schienenbahn 42 angeordnet sind.

Im gezeigten Ausführungsbeispiel fährt der Transport-Roboter 20 in Pfeilrichtung 23 auf der Fahrschiene 24. Dazu liegen reibschlüssig auf der Fahrschiene die getrennt angetriebenen Antriebsräder 22 auf, die von senkrecht hierzu angeordneten Führungsrollen 29 umgeben sind, die sich an seitlichen Profilen der Fahrschiene 24 abstützen, um so einen verkantungsfreien Betrieb des Transport-Roboters 20 auf den Fahrschienen 24 zu ermöglichen.

Auf der Oberseite des Gehäuses 21 ist ein nach oben hin offener Laderaum 33 zur Aufnahme mindestens eines Multifach-Behälters 1 angeordnet.

Es kann selbstverständlich auch vorgesehen sein, dass mehrere Multifach-Behälter im Laderaum 33 aufgenommen sind, und dass beispielsweise eine Beund Entladung von der linken oder rechten Seite des Transport-Roboters 20 erfolgt. Demnach sind die Teleskoparme 25, die die Bodenseite des Laderaums 33 bilden, in den Pfeilrichtungen 31 nach links oder rechts aus dem TransportRoboter 20 heraus verschiebbar angetrieben. Sie werden von der zentralen Steuerung des Transportroboters angesteuert.

Jeder Teleskoparm 25 ist von einem Transportband 26 überdeckt, welches als in sich geschlossenes Trum ausgebildet ist und beispielsweise als Zahnriemen ausgebildet ist. Dieser Zahnriemen ist als umlaufendes Trum verschiebbar angetrieben.

Die Vorderseite des jeweiligen Teleskoparmes 25 ist als in vertikaler Richtung konisch zulaufender Teleskopkopf 27 ausgebildet. In diesem Bereich sind Stützrollen 28 angeordnet sind, um ein Unterfahren des Teleskoparmes 25 unter die Bodenseite eines Multifach-Behälters 1 störungsfrei zu gewährleisten. Der Teleskopkopf bildet demnach eine Auflaufschräge zum Unterfahren der Bodenseite eines Multifach-Behälters, der beim Unterfahren des Teleskopkopfes leicht von einem als Standfläche dienenden Stützprofil 43 angehoben wird.

Der Laderaum 33 ist seitlich durch erhöht ausgeführte Seitenführungen 32 begrenzt und ist jeweils seitlich (stirnseitig) offen, um zu gewährleisten, dass ein dort im Laderaum 33 aufgenommener Multifach-Behälter 1 entweder in Pfeilrichtung 30 nach links oder rechts mit Hilfe der Teleskoparme ausgeschoben werden kann.

Die eingezeichnete Pfeilrichtung 30 ist auf die Antriebsrichtung der Transportbänder 26 gerichtet, die als in sich geschlossene Zahnriemen verschiebbar angetrieben auf dem Teleskoparm 25 angeordnet sind.

Statt der Anordnung eines Teleskoparmes 25 mit darauf angeordneten, umlaufend angetriebenen Transportbändern 26 können auch andere Ausschubsysteme verwendet werden, wie zum Beispiel ein einfacher Ausschubarm, der teleskopartig in der Art eines Spindelantriebes ausgebildet ist und der in der Lage ist, den Multifach-Behälter 1 aus dem Laderaum 33 in mindestens eine senkrecht zur Fahrtrichtung (Pfeilrichtung 23) stehende Entladeposition zu bringen. Dazu kann er als Greif- oder Stoßarm ausgebildet sein.

Die Erfindung ist demnach nicht auf einen Transport-Roboter mit Teleskoparmen 25 und darauf verschiebbar angetriebenen Transportbändern 26 beschränkt.

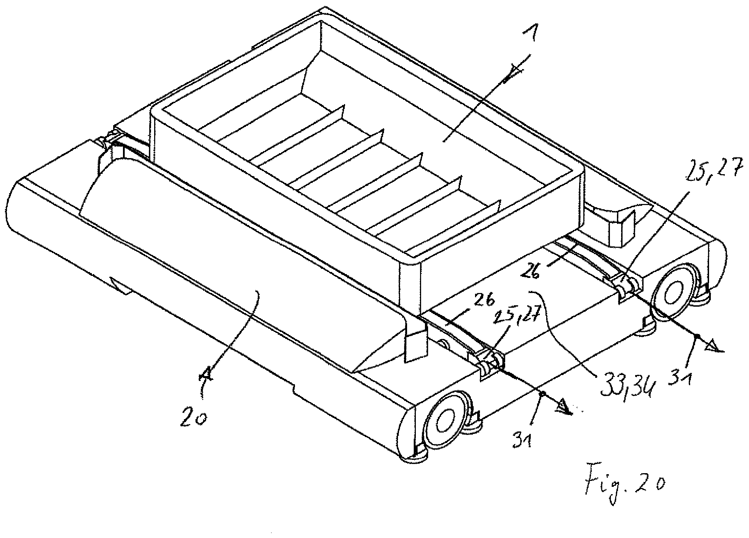

In Figur 20 ist eine erste Position eines Multifach-Behälters 1 dargestellt, der in seiner Ladeposition im Laderaum 33 des Transport-Roboters 20 dargestellt ist.

Seine Bodenseite liegt auf der Oberseite der verschiebbar angetriebenen Transportbänder 26 auf.

Es ist dargestellt, dass in einem ersten Verfahrensschritt zunächst die Teleskoparme 25 parallel zueinander in den Pfeilrichtungen 31 ausgeschoben werden, um so den aufgeladenen Multifach-Behälter 1 in der eingezeichneten Pfeilrichtung aus dem Laderaum 33 seitlich nach rechts herauszuschieben.

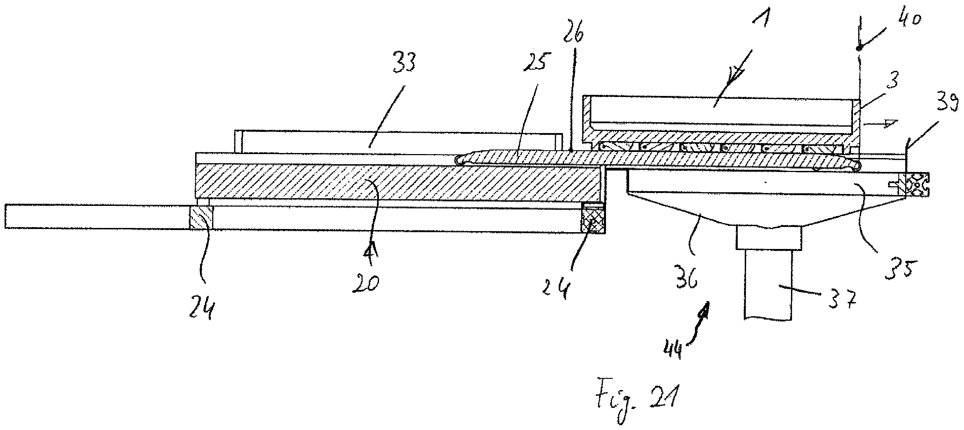

Eine solche teilweise Entladeposition ist in Figur 21 dargestellt, wo erkennbar ist, dass sich die rechte Querwand 3 bei Position 40 befindet, und der Anschlag 39 über einem Entladetrichter 35 noch nicht erreicht wurde.

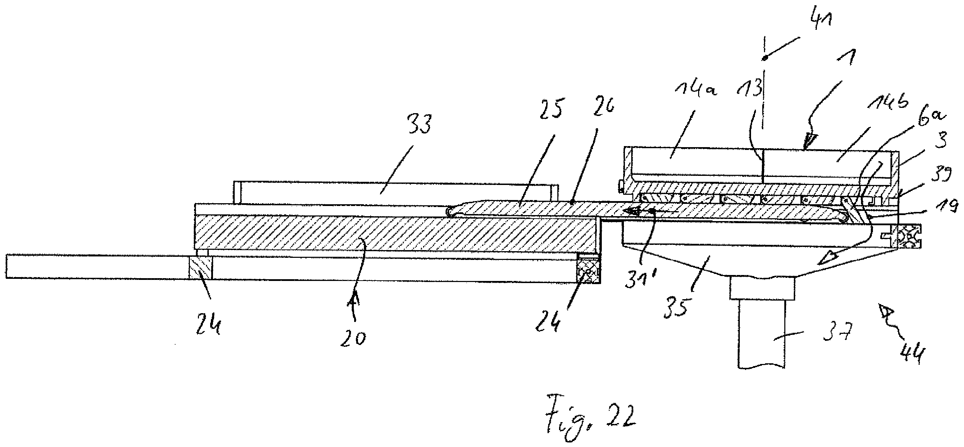

Bei Position 40 wird der Verschiebeantrieb für die Teleskoparme 25 gestoppt, und zur Erreichung der vollständigen Entladeposition nach Figur 22 wird nun der Antrieb für die Transportbänder 26 eingeschaltet, um so die rechte Querwand 3 des Multifach-Behälters 1 von der Position 40 in die endgültige Entladeposition mit Anschlag der Querwand 3 an den gehäusefesten Anschlag 39 zu bringen.

In Figur 21 ist auch dargestellt, dass die Öffnung sämtlicher Öffnungsklappen 6 dadurch blockiert ist dass der jeweilige Teleskoparm 25 unter die Öffnungsklappen 6 gefahren ist und deren Öffnung verhindert.

Die Figur 22 zeigt die anfängliche Entladeposition. Es ist dargestellt, dass beim Zurückziehen der Teleskoparme 25 in Pfeilrichtung 31' der Teleskopkopf 27 zunächst die vorderste Öffnungsklappe 6a freigibt, weil die Unterstützung des Teleskoparmes 25 für diese Öffnungsklappe 6a gemäß Figur 21 entfallen ist.

Erst beim Zurückziehen des Teleskoparmes 25 in Pfeilrichtung 31 gemäß Figur 22 werden nacheinander folgend die Öffnungsklappen 6a-6f freigegeben und verschwenken somit in ihre Offenstellung, um so nacheinander folgend entweder nur das Fachabteil 14b zu entleeren oder auch danach das Fachabteil 14a. Wenn mehr als zwei Fachabteile vorhanden sind, werden diese mit dem Zurückziehen der Teleskoparme 25 nacheinander folgend entleert.

Im gezeigten Ausführungsbeispiel ist nur eine Teilöffnung des Fachabteils 14b dargestellt, und zur vollständigen Entleerung des Fachabteils 14b würde der Teleskoparm 25 mit seinem Teleskopkopf 27 bis zur Position 41 zurückgezogen werden, um so alle dem Fachabteil 14b zugeordnete Öffnungsklappen 6a zu öffnen, und somit das in dem Fachabteil 14b enthaltene Füllgut sortenrein in den Entladetrichter 35 ausfließen zu lassen.

Der Entladetrichter 35 besteht aus Schrägwänden 36, die konisch auf ein darunter angeordnetes Fallrohr 37 zulaufen.

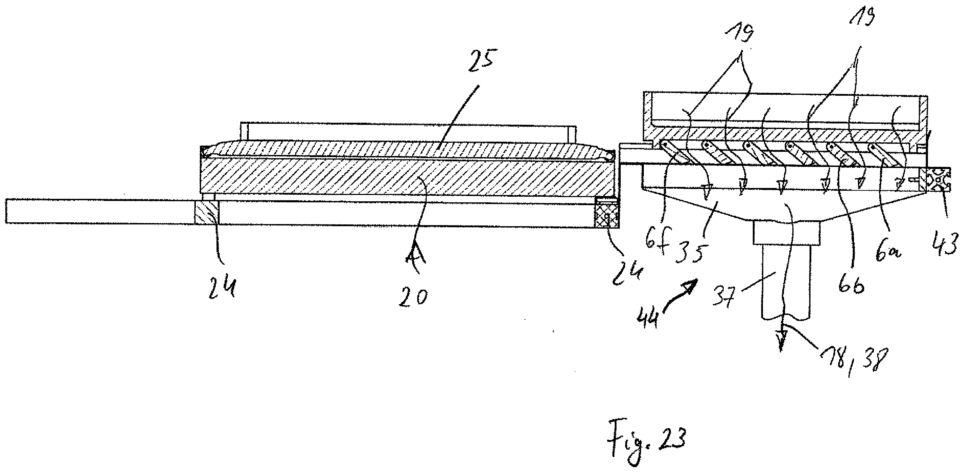

Die Figur 23 zeigt als abgewandeltes Ausführungsbeispiel im Vergleich zur Figur 22, dass eine Trennwand 13 entfallen ist und dass der gesamte Multifach-Behälter aus einem einzigen Fachabteil besteht, das mit einem sortenreinen Schüttgut befüllt ist. Deshalb werden bei vollständigem Rückzug des Teleskoparmes 25 in die in Figur 23 gezeigte Position nacheinander folgend alle Öffnungsklappen 6a-6f geöffnet, und somit das Schüttgut 18 als gesamter Inhalt des einzigen Fachabteils in Pfeilrichtung 19 aus der nunmehr geöffneten Bodenwand 5 des Multifach-Behälters 1 in das Fallrohr 37 fließen.

Mit der Abwandlung des Ausführungsbeispiels nach Figuren 22 und 23 wird klar, dass im Innenraum 8 des Multifach-Behälters 1 eine Vielzahl von Trennwänden 13 angeordnet sein können, und jede Trennwand zusammen mit einer oder mehreren bodenseitigen Öffnungsklappen jeweils ein Fachabteil 14a, 14b usw. bildet. Die verschiedenen Konfigurationsmöglichkeiten ergeben sich aus der Beschreibung des Ausführungsbeispiels nach Figur 5 und der sich daraus ergebenden weiteren Möglichkeiten (Matrixanordnung von Fachabteilen 14) usw.

Auf diese Weise können im Innenraum 8 eines Multifach-Behälters eine beliebige Anzahl von Fachabteilen 14, 14a, 14b angeordnet werden, und jedes Fachabteil ist dann sortenrein mit einem bestimmten Schüttgut gefüllt. Es ist nicht lösungsnotwendig, wenn sich ein Fachabteil von der einen Längswand 2 bis zur anderen Längswand 2 erstreckt. Anhand der Beschreibung zu Figur 5 wurde darauf hingewiesen, dass noch zusätzliche Quer-Trennfächer vorgesehen sein können, welche das eine oder die mehreren Trennfächer 13 im Winkel von 90 Grad schneiden und dadurch eine matrixartige Unterteilung der Fachabteile 14 bilden.

Die Anzahl der Trennfächer und der sie unterteilenden Quer-Trennfächer ist also unbegrenzt. Es kann möglich sein, keine Trennwand vorzusehen oder eine beliebige Anzahl von Trennwänden 13.

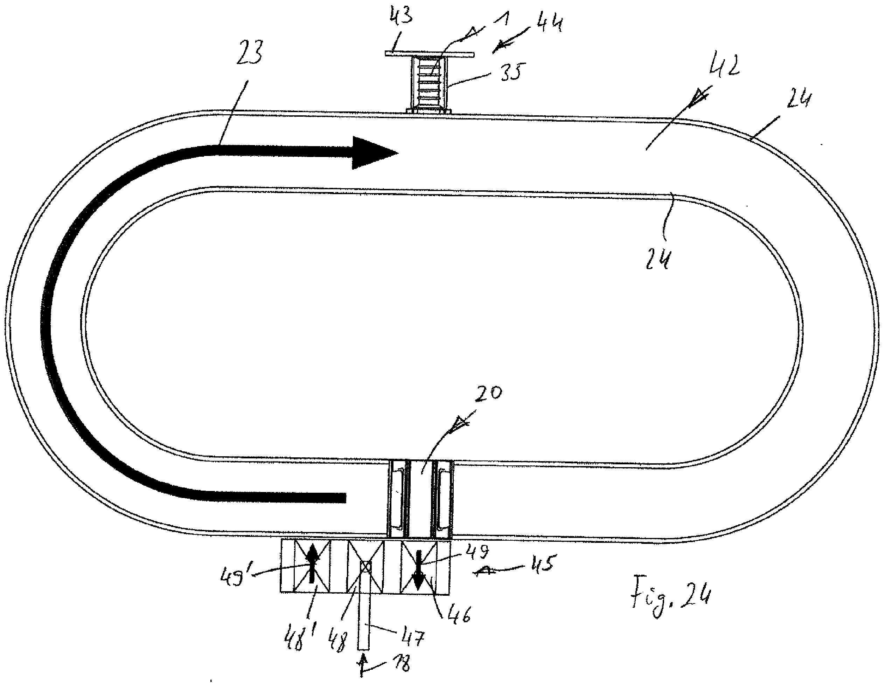

Im Ausführungsbeispiel nach Figur 24 ist die Draufsicht auf eine Schienenbahn 42 dargestellt, bei der im oberen Bereich eine Entladestation 44 entsprechend dem Ausführungsbeispiel nach den Figuren 22 und 23 angeordnet ist, und gegenüberliegend eine Befüllstation 45.

Es wird noch in Bezug auf Figur 23 angefügt, dass der Entladetrichter 35 auf einem Stützprofil 43 aufliegt, welches gehäusefest an der Schienenbahn montiert ist. Das Stützprofil ist auch in Figur 24 dargestellt.

Ausgehend von einer Befüllstation 45 in Figur 24 wird zunächst ein mittlerer Behälter 48 über ein Füllrohr 47 mit einem Schüttgut 18 befüllt und wird dann nach links in eine Parkposition gebracht, bei welcher der Behälter 48' darauf wartet, vom Transportroboter 20 abgeholt und aufgeladen zu werden.

Der Ladebetrieb erfolgt entgegengesetzt der Beschreibung zu den Figuren 20 bis 23.

Umgekehrt wird in Figur 24 ein leerer Behälter vom Transport-Roboter 20 als Leerbehälter 46 in der eingezeichneten Pfeilrichtung 49 abgeladen und der mittleren Station zur Befüllung mit dem Füllrohr 47 zugeführt.

In der Warteposition im Bereich der Befüllstation 45 sind die Stützprofile 43 so ausgebildet, dass alle Öffnungsklappen 6 von unten her untergriffen sind, um zu vermeiden, dass sich der gefüllte Multifach-Behälter in der Befüllstation 45 unbeabsichtigt öffnet.

Beim Aufladen des befüllten Behälters 48' in der eingezeichneten Pfeilrichtung 49' untergreifen die Teleskoparme 25 die jeweiligen Öffnungsklappen 6 und halten diese geschlossen, um zu vermeiden, dass sie sich beim Ladevorgang auf dem Transport-Roboter 20 entleeren.

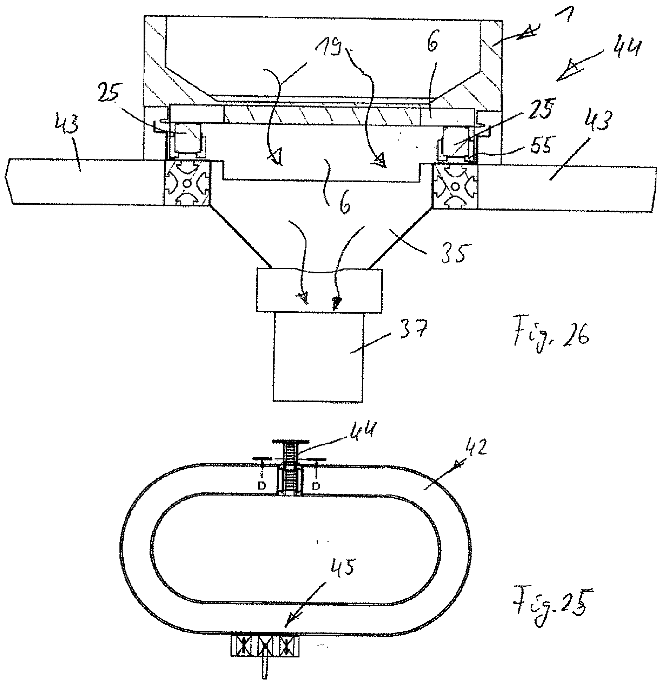

Die Figur 26 zeigt einen Schnitt in Pfeilrichtung D-D nach Figur 25 zur Erläuterung der Funktion einer Entladestation 44.

In Figur 26 ist dargestellt, dass der Teleskoparm 25 seitlich die jeweilige Öffnungsklappe 6 untergreift, um deren willkürliche Öffnung zu verhindern.

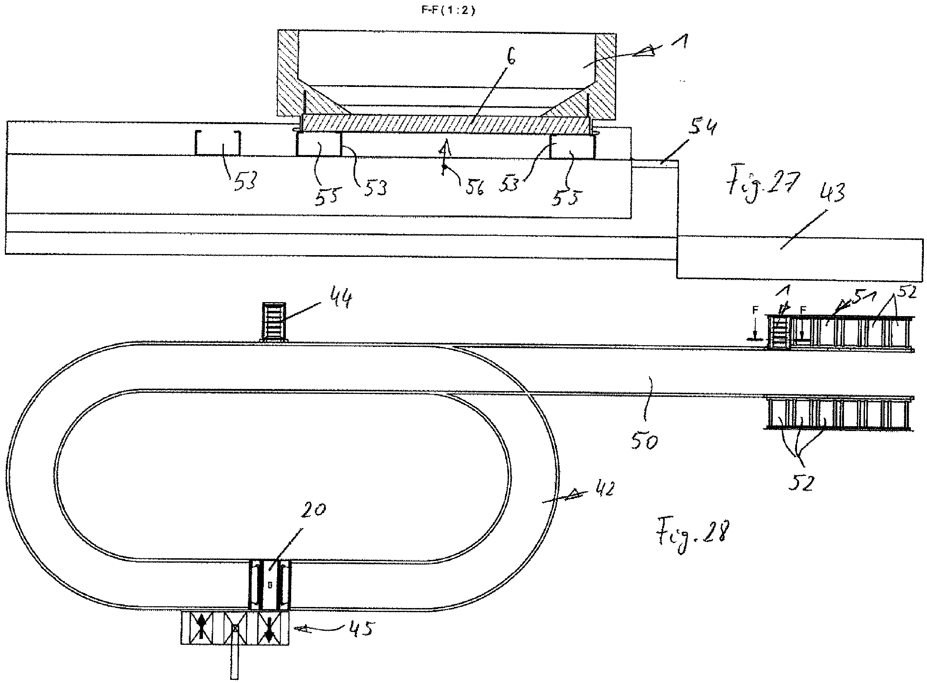

Der jeweilige Teleskoparm 25 fährt dabei in das Hohlprofil 55 des Stützprofils 43 hinein, welches auch in Figur 27 dargestellt ist.

Mit dem Hineinfahren des Teleskoparmes 25 in das Hohlprofil 55 wird der Multifach-Behälter 1 angehoben und die ursprüngliche Parkposition gemäß Figur 27, bei der die Öffnungsklappen 6 auf der Oberseite des Hohlprofils 55 aufliegen, wird verlassen. Der Multifach-Behälter 1 wird auf die Oberseite des Teleskoparmes 25 aufgelegt und mit den dort angeordneten, im Umlauf angetriebenen Transportbändern 26 weiterbewegt.

Dies ist auch in Figur 27 dargestellt. Die Figur 27 zeigt die Parkposition eines Multifach-Behälters in einem Regalsystem 51. Das Hohlprofil 55 ist im Bereich des Regalsystems ebenso auch im Bereich der Entladestation 44 angeordnet.

In der Parkposition liegen somit die geschlossenen Öffnungsklappen 6 satt auf den Oberseiten der Ablagebleche 53 als Teil des Hohlprofils 55 auf und sind deshalb gegen unbeabsichtigte Öffnung geschützt.

Erst wenn sie von den Teleskoparmen 25 in Pfeilrichtung 56 angehoben werden, werden sie auf die Oberseite des jeweiligen Teleskoparmes 25 aufgeladen, wie dies in Figur 26 dargestellt ist. Durch Antrieb der Transportbänder 26 werden sie vollständig auf den Teleskoparm 25 aufgezogen. Deshalb sind sie auch beim Aufziehen auf die Teleskoparme 25 gegen unbeabsichtigte Öffnung geschützt.

Das Regalsystem 51 bildet eine Vielzahl von Ablageplätzen 52, in denen die Multifach-Behälter 1 in einer zur Transportebene der Ausschleusungsstrecke 50 parallelen Anordnung angeordnet sein können. Sie können jedoch auch vertikal gestapelt übereinander angeordnet sein.

Statt einer beispielhaft gezeigten Ausschleusungsstrecke 50 können auch andere und/oder mehrere Aus- und Einschleusungsstrecken verwendet werden.

Der Ausschleusungsstrecke 50 ist jeweils einer Fahrschiene 54 zugeordnet, die bündig mit der Fahrschiene 24 der Schienenbahn 42 ist.

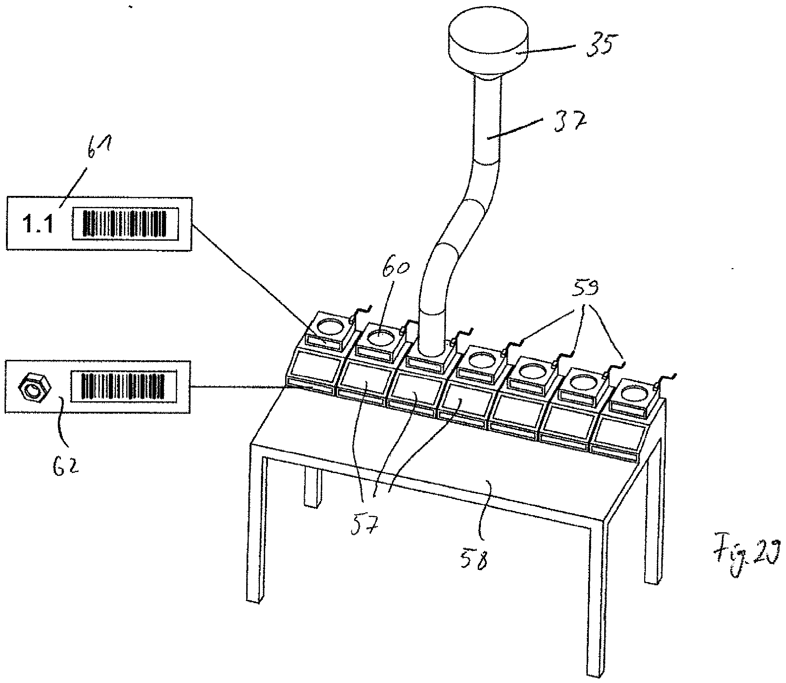

Die Figur 29 zeigt als Ausführungsbeispiel einen Lagertisch 58, auf dem eine Vielzahl von Sammelbehältern 57 angeordnet sind, in denen das jeweilige Schüttgut 18 sortenrein gelagert ist.

Vom Entladerichter 35 ausgehend wird das Fallrohr 37 manuell geführt in die zugeordnete Aufnahmeöffnung 60 des jeweiligen Sammelbehälters 57 gesteckt, um so gezielt jeden Sammelbehälter 57 sortenrein mit einem bestimmten Schüttgut zu füllen.

Die jeweils am Sammelbehälter 57 angeordneten Sensoren 59 stellen die jeweilige Steckposition des Fallrohres 37 in der Aufnahmeöffnung 60 des Sammelbehälters 57 fest.

Jedem Sammelbehälter 57 ist ein Markierungsetikett 61 zugeordnet, welches mit einem Barcode versehen ist, um den Sammelbehälter 57 zu identifizieren.

Ein weiteres Artikeletikett 62 mit einem anderen Barcode ist vorgesehen, um dem Sammelbehälter 57 die Art und Anzahl seines Schüttgutes zuzuordnen.

Statt einer manuellen Vereinzelung der Schüttgüter in unterschiedliche Sammelbehälter 57 kann es in einer nicht dargestellten Ausführungsform auch vorgesehen sein, dass das Fallrohr 37 maschinell und automatisch angetrieben ist und von Programmierbefehlen gesteuert in die zugeordneten Aufnahmeöffnungen 60 eingesteckt wird.

Statt einer manuellen Aufteilung der Füllgüter in unterschiedliche Sammelbehälter 57 kann demnach auch eine automatische Aufteilung vorgesehen sein.

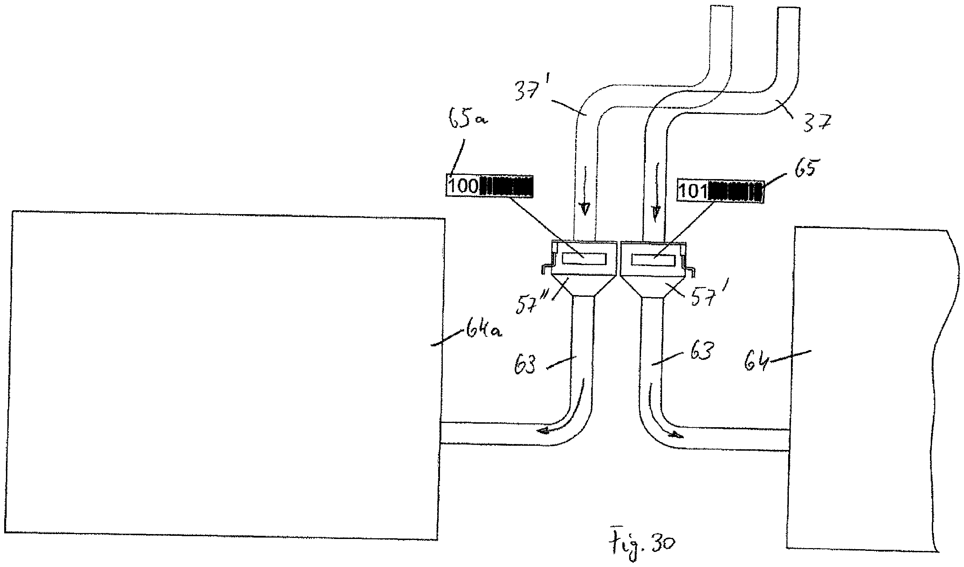

In Figur 30 sind zwei verschiedene Verschiebestellungen des Fallrohres 37, 37' dargestellt, wo erkennbar ist, dass dem Fallrohr 37 entsprechend seiner Verschiebungslage unterschiedlichen Sammelbehältern 57', 57" zugeordnet ist. Der eine Sammelbehälter 57' ist schüttgutleitend mit einem Füllrohr 63 verbunden, welches das Schüttgut in eine erste Verarbeitungsmaschine 64 einfüllt.

Der zweite Sammelbehälter 57" führt das andersartige Schüttgut über das Füllrohr 63 in eine andere Verarbeitungsmaschine 64a ein.

Jedem Sammelbehälter 57', 57" ist jeweils ein Artikeletikett 65, 65a zugeordnet, um so die sortenreine Zuführung von Schüttgut in unterschiedliche Verarbeitungsmaschinen 64, 64a zu kontrollieren.

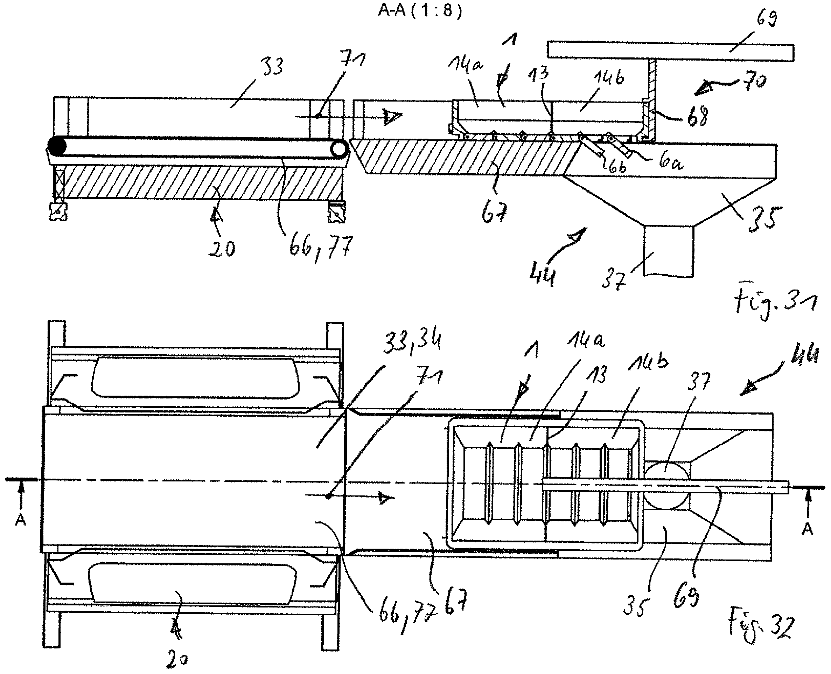

Die Figuren 31 bis 38 zeigen Ausführungsformen, die nicht gemäß der Erfindung sind.

Die Figuren 31 bis 34 zeigen eine weitere Ausführungsform mit einem abgewandelten Transportroboter 20, auf dem nunmehr die vorher angegebenen Teleskoparme 25, 26 entfallen und stattdessen ein einfacher Längsförderer 66 vorhanden ist, der im gezeigten Ausführungsbeispiel aus einem in sich geschlossenen Transportband 77 besteht, welches über nicht näher dargestellte Umlaufrollen verschiebbar angetrieben ist.

Statt eines über die gesamte Breite des Laderaumes 33 erstreckenden Transportbandes 77 können auch einzelne Transportriemen verwendet werden, die entweder gemeinsam oder auch getrennt, verschiebbar angetrieben sein können.

Diese Transportbänder oder Transportriemen können als Zahnriemen oder als Keilriemen ausgebildet sein.

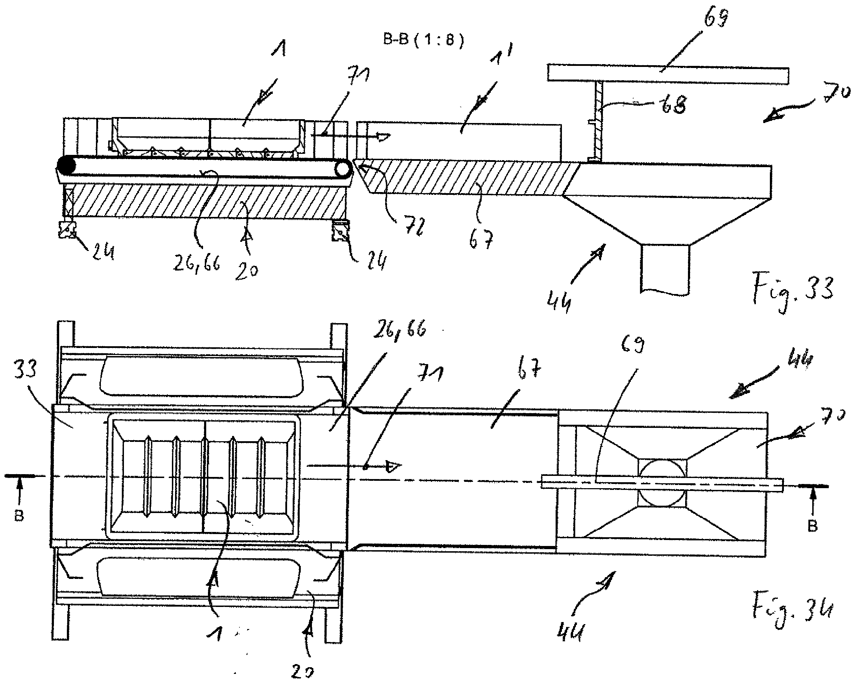

Im gezeigten Ausführungsbeispiel nach den Figuren 31 bis 34 wird somit der in dem Laderaum 33 aufgenommene Multifach-Behälter 1 gemäß Figur 34 in Pfeilrichtung 71 aus dem Laderaum 33 durch den Antrieb des Transportbandes 77 heraus befördert und gelangt auf eine transportschlüssig anschließende Auflaufebene 67.

Die Grundposition des Multifach-Behälters ist in den Figuren 33 und 34 dargestellt, während eine teilweise Ausschubposition in den Figuren 31 und 32 dargestellt ist.

Wie vorher dargestellt, wird die Bodenfläche 34 des Laderaumes 33 entweder durch Teleskoparme 25 mit darauf verschiebbar angetriebenen Transportbändern 26 gebildet, oder - im Ausführungsbeispiel nach den Figuren 31 bis 37 - aus einem einzelnen oder auch untergliederten Transportband 77, welches die Bodenfläche 34 des Laderaumes 33 des Transportroboters bildet.

Gemäß Figur 31 und 32 wird somit der auf die Auflaufebene 67 aus dem Laderaum 33 herausgeschobene Multifach-Behälter auf die Auflaufebene 67 befördert und von dort aus mit Hilfe einer dort angeordneten Greifvorrichtung 70 der Entladestation 44 zugeführt.

Die Greifvorrichtung 70 besteht im Prinzip aus einer Schlittenführung 69, die parallel zur Transportrichtung (Pfeilrichtung 71) ausgerichtet ist und die Schlittenführung 69 ist in nicht näher dargestellter Weise mit einem Greifarm 68 verbunden, der in der Lage ist, die Stirnseite des Behälters 1 zu ergreifen und über die Entladestation 44 zu ziehen.

Wie die Figur 31, 32 zeigen, öffnen sich mit der Zugbewegung der Schlittenführung 69 nacheinander folgend die Öffnungsklappen 6a, 6b, sodass damit entweder nur das vordere Fachabteil 14b und nach dessen Entleerung auch nachfolgend das Fachabteil 14a vollständig entleert werden kann.

Die Auflaufebene 67 ist mit einer Überlaufkante 72 ausgestattet, um zu gewährleisten, dass der Behälter 1 sauber und störungsfrei auf die Auflaufebene 67 herausbefördert und dann weiter von dem Greifarm 68 erfasst und der Entladestation 44 zugeführt werden kann.

Selbstverständlich funktioniert die Ausführung nach den Figuren 31 bis 34 auch in umgekehrter Richtung, dass nämlich über eine nicht näher dargestellte Füllstation der Behälter 1 nacheinander folgend mit getrennten Schüttgütern in seinen Fachabteilen 14a, 14b aufgefüllt wird und dann von der hier gezeigten Greifvorrichtung 70 auf den Transportroboter 20 und dessen Laderaum 33 aufgeschoben wird.

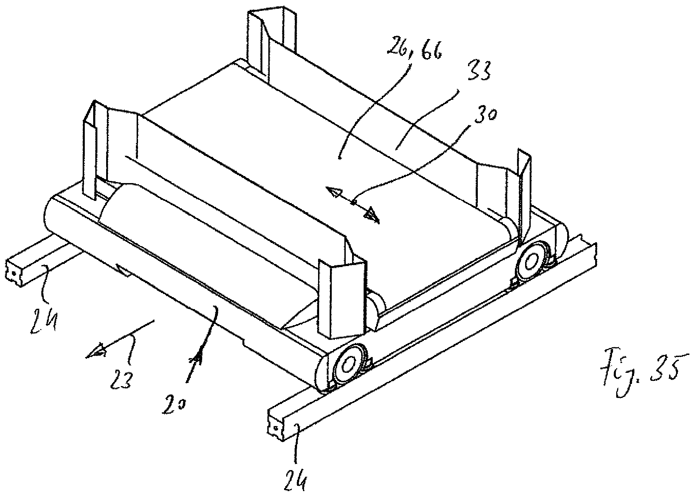

Die Figur 35 zeigt im Vergleich zur Figur 19 den gleichen Transportroboter, wobei jedoch in Figur 19 der Längsförderer 66 als verschiebbar angetriebene Teleskoparme 25 mit darauf angeordneten Transportbändern 26 ausgebildet war, während im Ausführungsbeispiel nach den Figuren 31 bis 35 der Längsförderer als einfaches umlaufend angetriebenes Transportband 77 ausgebildet ist.

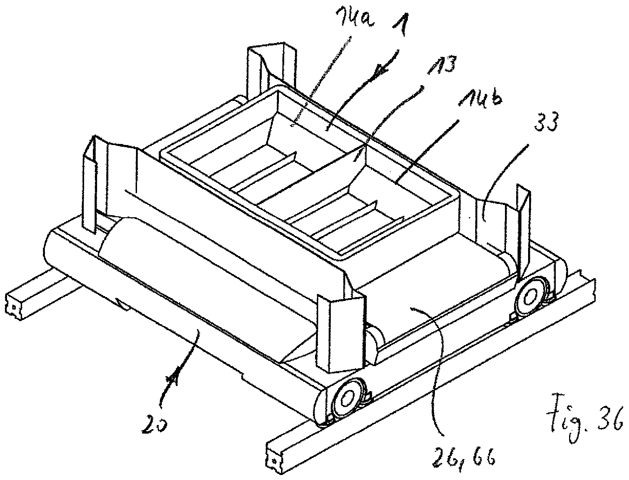

Die Figur 36 zeigt die Ladestellung des Transportroboters mit dem aufgeladenen Multifach-Behälter 1.

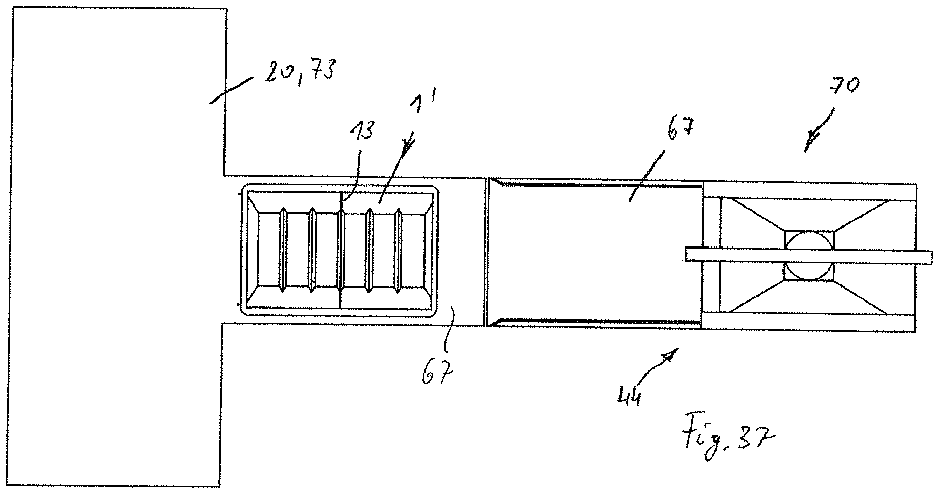

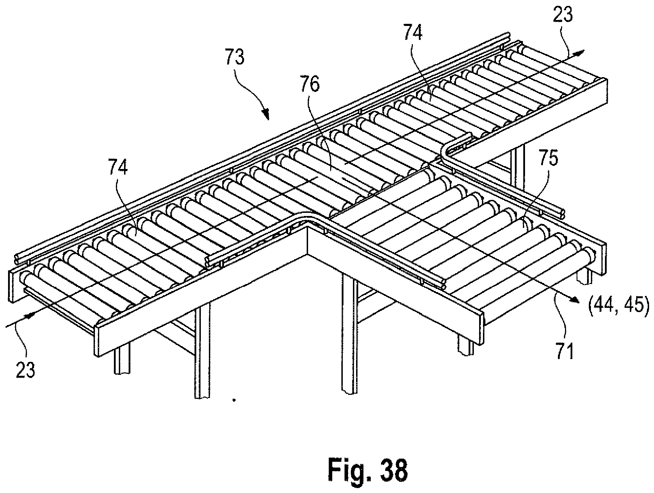

Die Figur 37 zeigt die Vereinzelung eines Multifach-Behälters entweder von einem Transport-Roboter 20 der dort nur schematisch dargestellt ist, oder von einem Rollenförderer 73, der in Figur 38 als Beispiel für einen solchen Rollenförderer gezeigt ist.

Der dort gezeigte Rollenförderer 73 besteht im Wesentlichen aus einer Längsstrecke 74 mit drehbar angetriebenen Rollen, von der aus ein Querförderer 75 abzweigt, sodass es ausgehend von der Transportrichtung in Pfeilrichtung 71 an einem Wendepunkt 76 möglich ist, den zu beladenden oder entladenden Multifach-Behälter 1 auf den Querförderer 75 zu bewegen, an den dann - wie in Figur 37 gezeigt - die Auflaufebene 67 anschließt und sich danach die Greifvorrichtung 70 anschließt.

Eine Ausführungsform zeigt auch Längsförderer, die zum Beispiel als Rollenförderer 73 ausgebildet sind, auf denen mit Schüttgut beladene Multifach-Behälter 1 transportiert werden.

Statt eines Rollenförderers 73 können selbstverständlich sämtliche bekannte andere Längsförderer verwendet werden, die zum Beispiel Förderer mit Riemenantrieb, Förderer mit Rollenantrieb oder dergleichen mehr.

### Zeichnungslegende

- 1: Multifach-Behälter
- 2: Längswand
- 3: Querwand
- 4: Abdeckprofil
- 5: Bodenwand
- 6: Öffnungsklappe a-f
- 7 8: Innenraum
- 9: Schwenklager
- 10: Verriegelungsschieber
- 11: Pfeilrichtung
- 12: Verriegelungsnase
- 13: Trennfach
- 14: Fachabteil a, b
- 15: Pfeilrichtung
- 16: Klappenkante
- 17: Bodenöffnung
- 18: Schüttgut 18a, 18b
- 19: Fallrichtung
- 20: Transport-Roboter
- 21: Gehäuse
- 22: Antriebsrad
- 23: Pfeilrichtung
- 24: Fahrschiene
- 25: Teleskoparm
- 26: Transportband
- 27: Teleskopkopf
- 28: Stützrollen
- 29: Führungsrolle
- 30: Pfeilrichtung (26)
- 31: Pfeilrichtung (25) 31'
- 32: Seitenführung
- 33: Laderaum
- 34: Bodenfläche (von 33)
- 35: Entladetrichter
- 36: Schrägwand
- 37: Fallrohr 37'
- 38: Pfeilrichtung
- 39: Anschlag
- 40: Position
- 41: Position
- 42: Schienenbahn
- 43: Stützprofil
- 44: Entladestation
- 45: Befüllstation
- 46: Leerbehälter
- 47: Füllrohr
- 48: Behälter 48'
- 49: Pfeilrichtung 49'
- 50: Ausschleusungsstrecke
- 51: Regalsystem
- 52: Ablageplätze
- 53: Ablageblech
- 54: Fahrschiene (in 51)
- 55: Hohlprofil
- 56: Pfeilrichtung
- 57: Sammelbehälter 57', 57"
- 58: Lagertisch
- 59: Sensor
- 60: Aufnahmeöffnung
- 61: Markierungsetikett
- 62: Artikeletikett
- 63: Füllrohr
- 64: Verarbeitungsmaschine a
- 65: Artikeletikett a
- 66: Längsförderer
- 67: Auflaufebene
- 68: Greifarm
- 69: Schlittenführung
- 70: Greifvorrichtung
- 71: Pfeilrichtung
- 72: Überlaufkante
- 73: Rollenförderer
- 74: Längsstrecke
- 75: Querförderer
- 76: Wendepunkt
- 77: Transportband

## Patentansprüche

1. Schienengebundener Transportroboter (20) mit einem etwa kastenförmigen, nach oben offenen Behälter (1) zur vereinzelten Abgabe von Schüttgut (18), der in seinem Innenraum mindestens ein mit dem Schüttgut (18) befülltes Fachabteil (14a, 14b) aufweist, wobei der Transportroboter (20) einen nach oben offenen Laderaum (33) aufweist, der zur Aufnahme des Behälters (1) geeignet ist, wobei der Behälter (1) bodenseitig auf einem Längsförderer (66) im Transportroboter (20) aufliegt, **dadurch gekennzeichnet, dass** der Längsförderer (66) bodenseitig am Behälter (1) angeordnete Öffnungsklappen (6a-6f) untergreift, durch welche das Schüttgut (18) bei Öffnung der Öffnungsklappen (6a-6f) ausfließt, wobei der Längsförderer (66) aus verschiebbar angetriebenen Teleskoparmen (25) besteht, die im Laderaum (33) des Transportroboters (20) angeordnet sind, wobei die Teleskoparme (25) im Bereich einer Entladestation (44) aus der Bodenseite des Behälters (1) zurückziehbar sind und dadurch nacheinander folgend die Öffnungsklappen (6a-6f) freigeben und entarretieren, wodurch die Öffnungsklappen (6a-6f) automatisch und schwerkraftbedingt herausschwenken.

2. Transportroboter nach Anspruch 1, **dadurch gekennzeichnet, dass** jeder Teleskoparm (25) von einem umlaufend angetriebenen Transportband (26) bedeckt ist, auf dem die Bodenseite des Behälters (1) aufsitzt.

3. Transportroboter nach einem der Ansprüche 1 oder 2, **dadurch gekennzeichnet, dass** die Teleskoparme (25) die bodenseitigen Öffnungsklappen (6a-6f) des Behälters (1) gegen unbeabsichtigte Öffnung sichern.

4. Transportroboter nach einem der Ansprüche 1 bis 3, **dadurch gekennzeichnet, dass** die Vorderseite des jeweiligen Teleskoparmes (25) als Auflaufschräge zum Unterfahren der Bodenseite des Behälters (1) ausgebildet ist, die den Behälter (1) beim Unterfahren eines einen Abladeplatz bildenden Stützprofils (43) anhebt.

5. Verfahren zum Betrieb eines schienengebundenen Transportroboters (20) auf einer Schienenbahn (42), wobei die Schüttgüter (18) in nach oben offenen Behältern (1) eingefüllt sind und die Behälter auf dem Transportroboter (20) in einem nach oben offenen Laderaum (33) aufgenommen sind, wobei in der Ladestellung die Bodenseite des Behälters (1) auf einem verschiebbar angetriebenen Längsförderer (66) aufsitzt, **dadurch gekennzeichnet, dass** an der Schienenbahn (42) eine oder mehrere Entlade- (44) und Befüllstationen (45) zum Materialtransport von Schüttgütern (18) angeordnet sind, wobei der Längsförderer (66) oder Teile von ihm bodenseitig im Behälter (1) angeordnete Öffnungsklappen (6a-6f) gegen Öffnung blockiert, und dass zur Entladung des Schüttguts (18) der Längsförderer (66) den Behälter (1) auf eine Auflaufebene (67) fördert, in deren Bereich eine Entladestation (44) angeordnet ist, wobei der Längsförderer (66) als verschiebbar angetriebene Teleskoparme (25) ausgebildet ist, die im Bereich der Entladestation (44) aus der Bodenseite des Behälters (1) in den Transportroboter (20) zurückgezogen werden und dadurch nacheinander folgend die Öffnungsklappen (6a-6f) frei geben und entarretieren, wodurch die Öffnungsklappen (6a-6f) automatisch und schwerkraftbedingt herausschwenken.

6. Verfahren nach Anspruch 5, **dadurch gekennzeichnet, dass** im Bereich der Entladestation (44) der roboterseitige Längsförderer (66) den Behälter auf eine Auflaufebene (67) fördert, von dort aus der Behälter (1) von einer Greifvorrichtung (70) einer Entladestation (44) zugeführt wird.

7. Verfahren nach einem der Ansprüche 5 oder 6, **dadurch gekennzeichnet, dass** die Teleskoparme (25) des Transportroboters (20) entlang der Bodenwand (5) des Behälters (1) verfahren werden und dabei die Schwenkarretierung der Öffnungsklappen (6a-6f) lösen.

8. Verfahren nach einem der Ansprüche 5 bis 7, **dadurch gekennzeichnet, dass**
1. in einem ersten Verfahrensschritt zunächst die Teleskoparme (25) parallel zueinander ausgeschoben werden, um einen aufgeladenen Behälter (1) aus dem Laderaum (33) in eine teilweise Entladeposition (40) seitlich auf ein schienenfestes Stützprofil (43) herauszuschieben,
2. dass in einem zweiten Verfahrensschritt bei Erreichen der teilweisen Entladeposition (40) der Verschiebeantrieb für die Teleskoparme (25) gestoppt wird,
3. dass in einem dritten Verfahrensschritt zur Erreichung der vollständigen Entladeposition ein Antrieb für auf den Teleskoparmen (25) angeordnete, verschiebbar angetriebene Transportbänder (26) eingeschaltet wird, um den Behälter (1) in die endgültige Entladeposition an einen gehäusefesten Anschlag zu fördern,
4. dass in einem vierten Verfahrensschritt die Teleskoparme (25) in den Laderaum (33) zurückgezogen werden und ein stirnseitiger Teleskopkopf (27) zunächst die vorderste Öffnungsklappe (6a) und danach wahlweise nacheinander folgend die weiteren Öffnungsklappen (6b-6f) freigibt.

9. Verfahren nach einem der Ansprüche 5 bis 8, **dadurch gekennzeichnet, dass** der Teleskoparm (25) in ein Hohlprofil (55) des Stützprofils (43) hinein fährt, dabei den Behälter (1) anhebt und auf die Oberseite des Teleskoparmes (25) durch Antrieb der Transportbänder (26) aufzieht.

10. Verfahren nach einem der Ansprüche 5 bis 7, **dadurch gekennzeichnet, dass**
in einem ersten Verfahrensschritt zunächst der roboterseitige Längsförderer (66) den aufgeladenen Behälter (1) aus dem roboterseitigen Laderaum (33) auf eine transportschlüssig an die Schienenbahn (42) anschließende Auflaufebene (67) fördert, und
dass in einem zweiten Verfahrensschritt der auf der Auflaufebene (67) abgesetzte Behälter (1) von einer verschiebbar angetriebenen Greifvorrichtung (70) einer Entladestation zugeführt wird.

11. Transportroboter nach einem der Ansprüche 1 bis 4, **dadurch gekennzeichnet, dass** die Bodenwand (5) des Behälters (1) aus einer Anzahl von schwenkbar gelagerten Öffnungsklappen (6a-6f) gebildet ist.

12. Transportroboter nach Anspruch 11, **dadurch gekennzeichnet, dass** der Behälter als Multifach-Behälter (1) mit mindestens zwei durch ein Trennfach (13) schüttgutdicht abgeteilten Fachabteilen (14, 14a, 14b) ausgebildet ist, und dass jedem Fachabteil (14, 14a, 14b) mindestens eine bodenseitige, schwenkbare Öffnungsklappe (6a-6f) zugeordnet ist.

13. Transportroboter nach einem der Ansprüche 11 oder 12, **dadurch gekennzeichnet, dass** die Öffnungsklappen (6a-6f) mit einem zentralen, horizontal bewegbaren Verriegelungsschieber (10) in ihrer Schließstellung arretierbar sind.

14. Transportroboter nach Anspruch 13, **dadurch gekennzeichnet, dass** am freien unteren Ende des Verriegelungsschiebers (10) jeweils eine Anzahl von Verriegelungsnasen (12) angeordnet sind, welche das freie schwenkbare Ende einer Klappenkante (16) der jeweiligen Öffnungsklappe 6a-6f untergreift und arretiert.

## Claims

1. Rail-bound transport robot (20) having an approximately box-like container (1) open at the top for sporadic delivery of bulk material (18) which has in its interior at least one compartment (14a, 14b) filled with the bulk material (18), wherein the transport robot (20) has a loading space (33) open at the top which is suitable for receiving the container (1), wherein the container (1) on the base side rests on a longitudinal conveyer (66) in the transport robot (20), **characterised in that** the longitudinal conveyer (66) on the base side engages under opening valves (6a-6f) arranged on the container (1) through which the bulk material (18) flows out when the opening valves (6a-6f) are opened, wherein the longitudinal conveyer (66) consists of displaceably driven telescopic arms (25) which are arranged in the loading space (33) of the transport robot (20), wherein the telescopic arms (25) are retractable from the base side of the container (1) in the region of an unloading station (44) and thus release and unlock the opening valves (6a-6f) following one after another, whereby the opening valves (6a-6f) pivot out automatically due to gravity.

2. Transport robot according to claim 1, **characterised in that** each telescopic arm (25) is covered by a rotary driven transport belt (26), on which the base side of the container (1) sits.

3. Transport robot according to one of claims 1 or 2, **characterised in that** the telescopic arms (25) secure the base-side opening valves (6a-6f) of the container (1) against unintentional opening.

4. Transport robot according to one of claims 1 to 3, **characterised in that** the front side of the respective telescopic arm (25) is configured as a lead-on slope for underrunning the base side of the container (1) which lifts the container (1) when underrunning a support profile (43) forming an unloading area.

5. Method of operating a rail-bound transport robot (20) on a rail track (42), wherein the bulk materials (18) are fed into containers (1) open at the top and the containers are received on the transport robot (20) in a loading space (33) open at the top, wherein in the loading position, the base side of the container (1) sits on a displaceably driven longitudinal conveyer (66), **characterised in that** one or more unloading stations (44) and filling stations (45) for material transport of bulk materials (18) are arranged on the rail track (42), wherein the longitudinal conveyer (66) or parts of it on the base side blocks openings valves (6a-6f) arranged in the container (1) from opening, and **in that** for unloading the bulk material (18), the longitudinal conveyer (66) conveys the container (1) onto a lead-on plane (67), in the region of which an unloading station (44) is arranged, wherein the longitudinal conveyer (66) is configured as displaceably driven telescopic arms (25) which are retracted from the base side of the container (1) into the transport robot (20) in the region of the unloading station (44) and thus release and unlock the opening valves (6a-6f) following one after another, whereby the opening valves (6a-6f) pivot out automatically due to gravity.

6. Method according to claim 5, **characterised in that** in the region of the unloading station (44), the robot-side longitudinal conveyer (66) conveys the container onto a lead-on plane (67), from where the container (1) is supplied to an unloading station (44) by a gripping device (70).

7. Method according to one of claims 5 or 6, **characterised in that** the telescopic arms (25) of the transport robot (20) are moved along the base wall (5) of the container (1) and thus release the pivot lock of the opening valves (6a-6f).

8. Method according to one of claims 5 to 7, **characterised in that**
1. in a first method step, first of all the telescopic arms (25) are pushed out parallel to one another in order to push out a loaded container (1) from the loading space (33) into a partial unloading position (40) laterally onto a support profile (43) fixed to the rail,
2. **in that** in a second method step, on reaching the partial unloading position (40), the displacing drive for the telescopic arms (25) is stopped,
3. **in that** in a third method step, to reach the complete unloading position, a drive for displaceably driven transport belts (26) arranged on the telescopic arms (25) is switched on in order to convey the container (1) into the final unloading position at a stop fixed to the housing,
4. **in that** in a fourth method step, the telescopic arms (25) are retracted into the loading space (33) and an end face-side telescopic head (27) first of all releases the foremost opening valve (6a) and then alternatively the further opening valves (6b-6f) following one after another.

9. Method according to one of claims 5 to 8, **characterised in that** the telescopic arm (25) moves into a hollow profile (55) of the support profile (43), thus lifts the container (1) and raises it onto the upper side of the telescopic arm (25) by driving the transport belts (26).

10. Method according to one of claims 5 to 7, **characterised in that** in a first method step, first of all the robot-side longitudinal conveyer (66) conveys the loaded container (1) from the robot-side loading space (33) onto a lead-on plane (67) connected to the rail track (42) for transport, and
**in that** in a second method step, the container (1) set-down on the lead-on plane (67) is supplied to an unloading station by a displaceably driven gripping device (70).

11. Transport robot according to one of claims 1 to 4, **characterised in that** the base wall (5) of the container (1) is formed from a number of pivotably mounted opening valves (6a-6f).

12. Transport robot according to claim 11, **characterised in that** the container is configured as a multi-compartment container (1) having at least two compartments (14, 14a, 14b) divided by a separating compartment (13) to be sealed to bulk material, and **in that** at least one base-side, pivotable opening valve (6a-6f) is assigned to each compartment (14, 14a, 14b).

13. Transport robot according to one of claims 11 or 12, **characterised in that** the opening valves (6a-6f) are lockable in their closed position by a central, horizontally movable locking slide (10).

14. Transport robot according to claim 13, **characterised in that** respectively a number of locking projections (12), which engage under and lock the free pivotable end of a valve edge (16) of the respective opening valve 6a-6f, are arranged on the free lower end of the locking slide (10).

## Revendications

1. Robot de transport sur rail (20) avec un contenant (1) à peu près en forme de caisson ouvert vers le haut pour la distribution individualisée de produit en vrac (18), qui comporte dans son espace intérieur au moins un compartiment à casier (14a, 14b) rempli avec le produit en vrac (18), dans lequel le robot de transport (20) comporte un espace de chargement (33) ouvert vers le haut qui est apte à recevoir le contenant (1), dans lequel le contenant (1) est posé côté fond sur un convoyeur longitudinal (66) dans le robot de transport (20), **caractérisé en ce que** le convoyeur longitudinal (66) vient en prise sous des clapets d'ouverture (6a-6f) disposés côté fond sur le contenant (1) par lesquels le produit en vrac (18) s'écoule lors de l'ouverture des clapets d'ouverture (6a-6f), dans lequel le convoyeur longitudinal (66) se compose de bras télescopiques (25) entraînés coulissants qui sont disposés dans l'espace de chargement (33) du robot de transport (20), dans lequel les bras télescopiques (25), dans la zone d'une station de déchargement (44), sont aptes à se rétracter du côté fond du contenant (1) et libèrent et débloquent ainsi successivement les clapets d'ouverture (6a-6f), moyennant quoi les clapets d'ouverture (6a-6f) pivotent vers l'extérieur automatiquement et par gravité.

2. Robot de transport selon la revendication 1, **caractérisé en ce que** chaque bras télescopique (25) est couvert par une bande transporteuse (26) entraînée en rotation, sur laquelle est posé le côté fond du contenant (1).

3. Robot de transport selon l'une des revendications 1 ou 2, **caractérisé en ce que** les bras télescopiques (25) protègent les clapets d'ouverture (6a-6f) côté fond du contenant (1) d'une ouverture non intentionnelle.

4. Robot de transport selon l'une des revendications 1 à 3, **caractérisé en ce que** le côté avant du bras télescopique (25) respectif est conformé en une inclinaison de rampe pour passer sous le côté fond du contenant (1), qui soulève le contenant (1) lorsqu'un profilé de support (43) formant un point de déversement passe dessous.

5. Procédé pour faire fonctionner un robot de transport sur rail (20) sur une voie à rail (42), dans lequel les produits en vrac (18) sont versés dans des contenants (1) ouverts vers le haut et les contenants sont reçus sur le robot de transport (20) dans un espace de chargement (33) ouvert vers le haut, dans lequel dans la position de chargement le côté fond du contenant (1) est posé sur un convoyeur longitudinal (66) entraîné de manière coulissante, **caractérisé en ce que** sur la voie à rail (42) sont disposées une ou plusieurs stations de déchargement (44) et de remplissage (45) pour le transport de matériau de produits en vrac (18), dans lequel le convoyeur longitudinal (66) ou des parties de celuici bloquent à l'encontre d'une ouverture des clapets d'ouverture (6a-6f) disposés côté fond dans le contenant (1), et **en ce que** pour le déchargement du produit en vrac (18), le convoyeur longitudinal (66) amène le contenant (1) sur un plan de rampe (67) dans la zone duquel est disposée une station de déchargement (44), dans lequel le convoyeur longitudinal (66) est conformé en des bras télescopiques (25) entraînés coulissants qui, dans la zone de la station de déchargement (44), sont rétractés dans le robot de transport (20) hors du côté fond du contenant (1) et libèrent et débloquent ainsi successivement les clapets d'ouverture (6a-6f), moyennant quoi les clapets d'ouverture (6a-6f) pivotent vers l'extérieur automatiquement et par gravité.

6. Procédé selon la revendication 5, **caractérisé en ce que** dans 1 zone de la station de déchargement (44), le convoyeur longitudinal (66) côté robot amène le contenant sur un plan de rampe (67), de là le contenant (1) est avancé par un dispositif de préhension (70) d'une station de déchargement (44).

7. Procédé selon l'une des revendications 5 ou 6, **caractérisé en ce que** les bras télescopiques (25) du robot de transport (20) sont déplacés le long de la paroi de fond (5) du contenant (1) et suppriment alors le blocage de pivotement des clapets d'ouverture (6a-6f).

8. Procédé selon l'une des revendications 5 à 7, **caractérisé en ce que**
1. dans une première étape de procédé, les bras télescopiques (25) sont tout d'abord déployés parallèlement l'un à l'autre pour faire sortir un contenant chargé (1) de l'espace de chargement (33) jusqu'à une position de déchargement partielle (40) latéralement sur un profilé de support (43) solidaire des rail,
2. que dans une deuxième étape de procédé, quand la position de déchargement partielle (40) est atteinte, l'entraînement de coulissement pour les bras télescopiques (25) est arrêté,
3. que dans une troisième étape de procédé, pour atteindre la position de déchargement complète, un entraînement pour des bandes de transport (26) entraînées coulissantes disposées sur les bras télescopiques (25) est déclenché pour amener le contenant (1) dans la position de déchargement définitive contre une butée solidaire du carter,
4. que dans une quatrième étape de procédé, les bras télescopiques (25) sont rétractés dans l'espace de chargement (33) et une tête télescopique côté frontale (27) libère tout d'abord le clapet d'ouverture de devant (6a) puis sélectivement de manière successive les autres clapets d'ouverture (6a-6f).

9. Procédé selon l'une des revendications 5 à 8, **caractérisé en ce que** le bras télescopique (25) entre dans un profilé creux (55) du profilé de support (43), soulève alors le contenant (1) et le tire sur le côté supérieur du bras télescopique (25) par entraînement des bandes de transport (26).

10. Procédé selon l'une des revendications 5 à 7, **caractérisé en ce que** dans une première étape de procédé, le convoyeur longitudinal (66) côté robot amène tout d'abord le contenant chargé (1) depuis l'espace de chargement (33) côté robot sur un plan de rampe (67) qui fait directement suite pour le transport à la voie à rail (42), et
dans une deuxième étape de procédé le contenant (1) déposé sur le plan de rampe (67) est avancé par un dispositif de préhension (70) entraîné de manière coulissante d'une station de déchargement.

11. Robot de transport selon l'une des revendications 1 à 4, **caractérisé en ce que** la paroi de fond (5) du contenant (1) est formée d'un nombre de clapets d'ouverture (6a-6f) montés pivotants.

12. Robot de transport selon la revendication 11, **caractérisé en ce que** le contenant (1) est conformé en un contenant multi-compartiment (1) avec au moins deux compartiments à casier (14, 14a, 14b) séparés de manière étanche au produit en vrac par un casier de séparation (13), et qu'à chaque compartiment à casier (14, 14a, 14b) est associé au moins un clapet d'ouverture (6a-6f) pivotant, côté fond.

13. Robot de transport selon l'une des revendications 11 ou 12, **caractérisé en ce que** les clapets d'ouverture (6a-6f) sont aptes à être arrêtés dans leur position de fermeture avec un coulisseau de verrouillage (10) central mobile horizontalement.

14. Robot de transport selon la revendication 13, **caractérisé en ce qu'à** l'extrémité inférieure libre du coulisseau de verrouillage (10) sont disposés respectivement un nombre d'ergots de verrouillage (12) qui viennent en prise sous l'extrémité pivotante libre d'une arête de clapet (16) du clapet d'ouverture (6a-6f) respectif et l'arrêtent.
